# EUROPÄISCHE PATENTSCHRIFT

(11) **EP 2 682 229 B1**
(45) Veröffentlichungstag und Bekanntmachung des Hinweises auf die Patenterteilung: **14.06.2023**
(21) Anmeldenummer: 13174695.0
(22) Anmeldetag: 02.07.2013
(51) Int. Cl.: B24B 5/04, B24B 5/35, B24B 41/00, B24B 49/04, B23Q 17/20, B23Q 7/04

(54) **WERKZEUGMASCHINE, INSBESONDERE SCHLEIFMASCHINE, SOWIE VERFAHREN ZUR SPANENDEN BEARBEITUNG VON WERKSTÜCKEN**
MACHINE TOOL, IN PARTICULAR GRINDING MACHINE, AND METHOD FOR MACHINING WORKPIECES
MACHINE-OUTIL, NOTAMMENT PONCEUSE, ET PROCÉDÉ D'USINAGE DE PIÈCES PAR ENLÈVEMENT DE COPEAUX

(30) Priorität: 02.07.2012 DE 102012105842
(43) Veröffentlichungstag der Anmeldung: 08.01.2014
(73) Patentinhaber: Fritz Studer AG, 3612 Steffisburg (CH)
(72) Erfinder: Zwahlen, Reto, 3612 Steffisburg (CH)
(74) Vertreter: Witte, Weller & Partner Patentanwälte mbB

(56) Entgegenhaltungen:
- WO-A1-2011/085913
- DE-A1- 2 902 208
- DE-A1-102008 055 795
- US-A- 2 625 773

## Beschreibung

Die Erfindung betrifft eine Werkzeugmaschine, insbesondere Schleifmaschine, zur spanenden Bearbeitung von Werkstücken, mit einer Werkstückaufnahme zur Aufnahme eines Werkstücks und mit einem Spindelkopf zur Aufnahme eines Werkzeugs, insbesondere einer Schleifscheibe. Die Erfindung betrifft ferner ein Verfahren zur automatisierten spanenden Bearbeitung von Werkstücken, insbesondere zum Schleifen von Werkstücken in einer Schleifmaschine.

Aus der DE 10 2008 045 843 A1 ist eine Schleifmaschine zum Schleifen von wellenförmigen Werkstücken bekannt, mit einem Maschinengestell, einem Werkstückspindelstock und einem Reitstock zum Einspannen des Werkstückes, mit mindestens zwei Schleifeinheiten mit jeweils einer eine Schleifscheibe tragenden Spindel zum Schleifen der Werkstücke, wobei die Schleifeinheiten über Schlitten in mindestens einer Richtung beweglich am Maschinengestell angeordnet sind, mit einer Messeinrichtung zum Ermitteln von Werkstückabmessungen und mit einer Be- und Entladeeinrichtung, wobei die Messeinrichtung über den ersten Schlitten zusammen mit der Schleifeinheit verfahrbar ist und die Be- und Entladeeinrichtung über den zweiten Schlitten zusammen mit der zweiten Schleifeinheit verfahrbar ist

Aus der US 2,625,773 A ist eine automatische Rundschleifmaschine bekannt, mit einem Tischschlitten, einem Schleifscheibenschlitten, einem Zustellmechanismus, der einen Kolben und einen Zylinder zur Bewegung des Schleifscheibenschlittens umfasst, einem beweglich aufgenommenen Rohteilzuführmechanimus, einem Reitstock mit einer beweglichen Spitze, einer beweglich aufgenommenen Rohteilmessvorrichtung, und mit einer Steuervorrichtung, die dazu ausgestaltet ist, den Zustellmechanismus zu steuern, und mit einem Servomotor, der eine erste Kolben/Zylinder Paarung, die mit der Rohteilmessvorrichtung und dem Rohteilzuführmechanimus verbunden ist, und eine zweite Kolben/Zylinder Paarung aufweist, die der ersten Kolben/Zylinder Paarung benachbart aber von dieser beabstandet ist, und die dazu ausgestaltet ist, die Spitze des Reitstocks zu bewegen.

Aus der DE 10 2008 055 795 A1 ist eine Vertikalschleifmaschine bekannt, mit einer Werkstückspindeleinheit mit einer Spanneinrichtung zum Einspannen eines Werkstücks, zumindest einer ersten Schleifeinheit zur schleifenden Bearbeitung eines in der Spanneinrichtung eingespannten Werkstücks, einer ersten Führungseinheit zum Verfahren der ersten Schleifeinheit in eine erste Richtung, und einer zweiten Führungseinheit zum Verfahren der ersten Schleifeinheit in eine nicht parallel zur ersten Richtung verlaufende, zweite Richtung, insbesondere in eine zweite Richtung senkrecht zur ersten Richtung, und mit einer an der ersten Schleifeinheit oder einem Schlitten der ersten Schleifeinheit angeordneten Handhabungseinrichtung mit zumindest einem Greifer zum Greifen eines Werkstücks, und/oder einer an der ersten Schleifeinheit oder einem Schlitten der ersten Schleifeinheit angeordneten Messeinrichtung..

Aus der WO 2011/085913 A1 ist eine Rundschleifmaschine bekannt, mit einem Werkstück-Spindelstock, dessen Werkstück-Spindel als Drehantrieb für Rundstangen ausgebildet und in Richtung seiner Spindelachse auf dem Maschinenbett gesteuert verfahrbar ist, mit einem senkrecht zu der Bewegungsrichtung des Werkstück-Spindelstocks beweglich geführten Führungsschlitten, der eine Schleifspindel mit einer Schleifscheibe trägt, die im Schleifbetrieb an die Rundstange zugestellt wird, und mit einer Rundstangen-Stütze, die sich zwischen dem Werkstück-Spindelstock und dem Schleifbereich dicht neben diesem befindet, wobei die Rundstangen-Stütze eine sich selbsttätig nachstellende, selbstzentrierende Lünette mit drei Lünettenbacken ist, wobei eine Messvorrichtung vorgesehen ist, mit der im laufenden Schleifbetrieb ständig das Ist-Mass der Rundstange am Schleifbereich gemessen und über die Maschinensteuerung das Schleifergebnis korrigiert wird, wobei an einem Messkopf der Messvorrichtung befindliche Tastglieder im Schleifbereich der Schleifscheibe angeordnet sind, wobei die Schleifspindel, die Lünette und der Messkopf zumindest im laufenden Schleifbetrieb eine Einheit bilden, die in der Bewegungsrichtung des Werkstück-Spindelstocks stationär ist, und wobei die Rundschleifmaschine derart ausgebildet ist, dass der Werkstück-Spindelstock die Rundstange im Schleifbetrieb an der rotierenden Schleifscheibe entlang zieht, wobei die Lünette in fester Längszuordnung zu der Schleifscheibe steht und an dem bereits geschliffenen Bereich der Rundstange anliegt.

Aus der DE 29 02 208 A1 ist eine Schleifmaschine bekannt, mit einem Maschinenblock, einer Werkstückspindel zur drehbaren Abstützung eines Werkstücks, das im Maschinenblock angeordnet ist, einer Schleifspindel, und mit einer mit einem Arm versehenen Einrichtung zum Verschwenken der Werkstückspindel mit dem daran aufgenommenen Werkstück. Mit anderen Worten ist die Werkstückspindel insgesamt um eine Achse parallel zu ihrer Längsachse verschwenkbar, um einen Werkstückwechsel vornehmen zu können.

Werkzeugmaschinen, etwa Schleifmaschinen, insbesondere Rundschleifmaschinen, sind im Stand der Technik bekannt. So können beispielsweise Rundschleifmaschinen rotationssymmetrische Werkzeuge, etwa Schleifscheiben, aufweisen. Diese können in geeigneter Weise mit einem Werkstück zur Materialabtragung zusammenwirken. Rundschleifmaschinen können beispielsweise zum Außenrundschleifen, Innenrundschleifen, ferner zum Einstechschleifen bzw. Schrägeinstechschleifen ausgebildet sein. Neben Schleifscheiben können beim Rundschleifen grundsätzlich auch Schleifbänder zur Anwendung kommen. Neben rotationssymmetrischen Werkstückflächen können etwa auch exzentrisch ausgebildete Werkstückflächen bearbeitet werden, wenn die Werkstückaufnahme und eine Werkzeugeinheit (etwa der Spindelkopf) in geeigneter Weise antreibbar und relativ zueinander verfahrbar sind. Auf diese Weise können etwa Nockenwellen, Kurbelwellen oder ähnliche Werkstücke mit exzentrischen Geometrien bearbeitet bzw. geschliffen werden. Ferner sind Werkzeugmaschinen bekannt, die eine kombinierte Bearbeitung von Werkstücken erlauben, etwa kombinierte Schleif- und Drehmaschinen.

Ein zu bearbeitendes Werkstück kann etwa zwischen zwei Spitzen einer Werkstückaufnahme oder aber einseitig in einer Werkstückaufnahme aufgenommen sein. Daneben ist das sogenannte spitzenlose Schleifen bekannt, bei dem das Werkstück in der Schleifmaschine nicht (axial) zwischen Spitzen aufgenommen ist. Vielmehr kann das Werkstück etwa über Auflageschienen, Regelscheiben, Führungsrollen, Lünetten oder dergleichen aufgenommen und geführt werden.

Werkzeugmaschinen, insbesondere Schleifmaschinen, können verschiedene Automatisierungsgrade aufweisen. Beispielhaft sind konventionelle Schleifmaschinen bekannt, bei denen ein Werkzeugwechsel, Werkstückwechsel sowie eine Steuerung des Bearbeitungsvorgangs im Wesentlichen manuell durch einen Bediener durchgeführt wird. Daneben sind grundsätzlich Schleifmaschinen bekannt, die automatisiert mit Werkstücken beladen werden können. In gleicher Weise können bearbeitete (etwa geschliffene) Werkstücke entladen werden. Mit geeigneten Handlingvorrichtungen kann somit ein im Wesentlichen autonomer Betrieb ermöglicht werden, ohne dass manuelle Bedienereingriffe erforderlich sind. Derartige Werkzeugmaschinen oder Fertigungssysteme eignen sich insbesondere für die Großserienfertigung. Die Werkzeugmaschinen sind regelmäßig als Einzweckmaschinen ausgestaltet und insbesondere dahingehend optimiert, ein Verhältnis aus Hauptzeiten (Zeiten der eigentlichen Bearbeitung) und Nebenzeiten (etwa Zeiten für den Wechsel der Werkstücke) zu maximieren. Hierzu sind aufwändige Gestaltungen und hohe Investitionen erforderlich.

Beispielhaft kann die Fertigung von Mittelserien grundsätzlich sowohl mit hochautomatisierten Werkzeugmaschinen, ebenso jedoch auch mit Werkzeugmaschinen mit niedrigem Automatisierungsgrad durchgeführt werden. Es wäre von Vorteil, eine Werkzeugmaschine bereitstellen zu können, die eine wirtschaftliche Fertigung von Mittelserien erlauben kann.

Bei der spanenden Bearbeitung, insbesondere bei der Schleifbearbeitung, besteht häufig der Wunsch nach hochgenauen und reproduzierbaren Fertigungsergebnissen. Vor diesem Hintergrund erfolgt eine Teilefertigung häufig unter Zuhilfenahme einer sogenannten In-Prozess-Messung. Mittels der In-Prozess-Messung können Werkstückabmessungen, etwa Durchmesser oder Ähnliches, bei der Bearbeitung zumindest zeitweise kontinuierlich erfasst und überwacht werden. Auf diese Weise kann etwa bei der Erfassung von Abweichungen von Sollwerten der Bearbeitungsvorgang angepasst werden, um Zielvorgaben möglichst erreichen zu können. Die In-Prozess-Messung kann es erlauben, dynamische Abweichungen, etwa einen sogenannten thermischen Gang der Werkzeugmaschine, zu erfassen und möglichst zu kompensieren.

Werkzeugmaschinen, insbesondere Schleifmaschinen, werden häufig hinsichtlich der möglichen Größe zu bearbeitender Werkstücke klassifiziert. Beispielhaft kann die maximale Größe eines Werkstücks von einer Spitzenweite und einer Spitzenhöhe abhängen, die durch die Werkstückaufnahme limitiert sind. Mit anderen Worten weist die Werkstückaufnahme regelmäßig einen maximalen Bearbeitungsraum auf, in dem das Werkstück aufgenommen und bearbeitet werden kann. Häufig weisen Werkzeugmaschinen verschiedene Einbauten auf, die für die eigentliche Bearbeitung nicht unmittelbar erforderlich sind, jedoch durch ihre Anwesenheit den möglichen Bearbeitungsraum einschränken bzw. eine Zugänglichkeit von außen erschweren können. Derartige Einbauten können etwa als Messeinrichtungen, Handhabungseinrichtungen zum Werkstückwechsel oder zum Schleifscheibenwechsel, Versorgungseinrichtungen für Kühlmittel und Schmiermittel, ebenso jedoch auch als Einrichtungen für Sonderfunktionen, beispielsweise Einrichtungen zum Schrägstellen des Werkzeugs, Einrichtungen zum Einschwenken verschiedener Werkzeugspindeln oder dergleichen ausgebildet sein.

Vor diesem Hintergrund liegt der Erfindung die Aufgabe zugrunde, eine Werkzeugmaschine, insbesondere Schleifmaschine, sowie ein korrespondierendes Verfahren zur spanenden Bearbeitung von Werkstücken etwa in einer Schleifmaschine anzugeben, wobei die Werkzeugmaschine bei einfachem Aufbau und mit geringem Aufwand eine umfassende Funktionalität bereitstellen können soll, sich ferner möglichst zur zumindest teilweise automatisierten Fertigung eignen und insbesondere gegebene Bauraumverhältnisse bei Werkzeugmaschinen optimal nutzen können soll. Ferner soll die spanende Bearbeitung möglichst hochgenau und reproduzierbar erfolgen können.

Diese Aufgabe wird erfindungsgemäß durch eine Werkzeugmaschine, insbesondere Schleifmaschine, zur spanenden Bearbeitung von Werkstücken gelöst, mit einer Werkstückaufnahme zur Aufnahme eines Werkstücks, mit einem Spindelkopf zur Aufnahme eines Werkzeugs, insbesondere einer Schleifscheibe, mit einer Handhabungseinrichtung zum automatisieren Werkstückwechsel, und mit einer Messeinrichtung zur Erfassung zumindest eines Werkstückparameters, wobei die Handhabungseinrichtung zumindest ein Handhabungsorgan, insbesondere zumindest ein Greiforgan, aufweist, wobei die Messeinrichtung zumindest ein Messorgan aufweist, wobei die Handhabungseinrichtung und die Messeinrichtung mit einem gemeinsamen Positionierantrieb gekoppelt sind und durch den Positionierantrieb gemeinsam zwischen einer Arbeitsstellung, in der eine Bearbeitung des Werkstücks ermöglicht ist, und zumindest einer Sekundärstellung, in der ein Beladevorgang oder Entladevorgang ermöglicht ist, verlagerbar sind, wobei die Handhabungseinrichtung und die Messeinrichtung miteinander verbundene Grundkörper aufweisen, die relativ zueinander starr gekoppelt sind, wobei der Positionierantrieb dazu ausgebildet ist, die Handhabungseinrichtung und die Messeinrichtung relativ zu einer durch die Werkstückaufnahme definierten Längsachse zu verlagern, und wobei der Positionierantrieb als Schwenkantrieb ausgebildet ist.

Die Aufgabe der Erfindung wird auf diese Weise vollständig gelöst.

Erfindungsgemäß ist nämlich lediglich ein Positionierantrieb erforderlich, um die Handhabungseinrichtung und die Messeinrichtung in gewünschter Weise verfahren oder verlagern zu können. Die Handhabungseinrichtung ist grundsätzlich dazu ausgebildet, das Werkstück für Beladevorgänge oder Entladevorgänge halten bzw. tragen zu können. Die Messeinrichtung ist grundsätzlich dazu ausgebildet, zumindest einen Werkstückparameter bei der Bearbeitung des Werkstücks zu erfassen. Demzufolge erfolgt die Erfassung im Wesentlichen in der Arbeitsstellung des Werkzeugs.

Beim Wechsel zwischen der Arbeitsstellung und der zumindest einen Sekundärstellung, also etwa beim Zuführen oder Abführen des Werkstücks, wird die Messeinrichtung gewissermaßen nebenbei mit der Handhabungseinrichtung verlagert. Somit wird sichergestellt, dass die Messeinrichtung in der Arbeitsstellung bereits eine gewünschte Grundausrichtung bezüglich des Werkstücks aufweist.

In der Arbeitsstellung ist das zu bearbeitende Werkstück durch die Werkstückaufnahme aufgenommen bzw. wird an dieser gehalten oder zumindest gelagert. Es ist daher nicht erforderlich, dass die Handhabungseinrichtung mit dem zumindest einen Handhabungsorgan in der Arbeitsstellung das Werkstück trägt. Vielmehr kann die Handhabungseinrichtung in der Arbeitsstellung vom Werkstück (funktional) entkoppelt sein.

Bekannte Schleifmaschinen mit einer automatisierten Werkstückwechselvorrichtung können etwa Handhabungseinrichtungen und Messeinrichtungen aufweisen, die jeweils separate Positionierantriebe aufweisen. Auf diese Weise muss zum wechselseitigen Zuführen bzw. Wegführen der Komponenten jeweils eine separate Bewegung vollzogen werden. Die Kopplung der Handhabungseinrichtung und der Messeinrichtung mit lediglich einem Positionierantrieb erlaubt hingegen eine überaus kompakte Bauweise. Daneben kann sich eine Antriebssteuerung vereinfachen. Gleichwohl kann die Messeinrichtung dazu ausgebildet sein, bei der Bearbeitung (in der Arbeitsstellung) eine In-Prozess-Messung zu ermöglichen. Bei der Bearbeitung kann es sich etwa um einen Schleifvorgang handeln. Hierzu kann der Spindelkopf etwa als Schleifkopf ausgebildet sein.

Die zumindest eine Sekundärstellung umfasst eine Stellung des Positionierantriebs und der damit gekoppelten Handhabungseinrichtung, in der eine Übernahme des Werkstücks (Beladevorgang) oder eine Übergabe des Werkstücks (Entladevorgang) ermöglicht ist. Die Übernahme kann beispielhaft in die Schleifmaschine hinein, die Übergabe aus der Schleifmaschine heraus erfolgen. Bei der Verlagerung zwischen der Arbeitsstellung und der zumindest einen Sekundärstellung wird die Messeinrichtung zwangsweise mit der Handhabungseinrichtung etwa relativ zur Werkstückaufnahme verlagert. Dies beruht auf einer Zwangskopplung zwischen beiden Einrichtungen. Bereits beim Greifen eines (neuen) Werkstücks in zumindest einer Sekundärstellung kann die Messeinrichtung gewissermaßen nebenbei bereits grob relativ zum Werkstück ausgerichtet werden. Diese Grobausrichtung bleibt beim Verlagern aus der Sekundärstellung in die Arbeitsstellung erhalten. Es ist kein separater Einschwenkvorgang für die Messeinrichtung erforderlich.

Bei der gemeinsamen Verlagerung der Handhabungseinrichtung und der Messeinrichtung kann es sich um eine allgemeine Bewegung handeln, die relativ zur Werkstückaufnahme erfolgen kann. Die Verlagerung umfasst ein Einschwenken. Bei der Verlagerung kann es sich auch um eine kombinierte Bewegung handeln, die etwa eine Schwenkkomponente und eine (gerade) Schubkomponente aufweist.

Der zumindest eine Werkstückparameter, der mittels der Messeinrichtung erfassbar ist, kann eine Werkstückgeometrie betreffen, etwa einen Durchmesser, eine Rundheit, einen Rundlauf, eine Rauheit, Lagetoleranzen sowie Formtoleranzen und weitere geometrische Größen des Werkstücks, die für die Bearbeitung von Relevanz sein können.

Es versteht sich, dass die Eignung der Handhabungseinrichtung zum automatisierten Werkstückwechsel nicht zwangsläufig bedeutet, dass die Handhabungseinrichtung einen vollständigen Werkstückwechsel durchführen kann. Vielmehr kann die Handhabungseinrichtung dazu ausgebildet sein, Teilabschnitte des Werkstückwechsels zu realisieren. Die Handhabungseinrichtung kann etwa das Werkstück entlang eines Pfades von der Werkstückaufnahme wegbewegen und anschließend an weitere (etwa externe) Handlingeinrichtungen übergeben. In umgekehrter Weise kann ein (neues) Werkstück von einer externen Handlingeinrichtung übernommen werden und der Werkstückaufnahme zugeführt werden.

Die Kombination der Handhabungseinrichtung und der Messeinrichtung mit einem gemeinsamen Positionierantrieb erlaubt eine hinreichende Werkstückwechselgeschwindigkeit bei hoher Flexibilität und Anpassbarkeit an geänderte Werkstückgeometrien. Zeiten für ein separates Einschwenken einer separaten Messeinrichtung lassen sich einsparen. Das Umrüsten auf eine geänderte Werkstückgeometrie kann sich vereinfachen, da etwa ein angepasster Positionierantrieb sowohl auf die Handhabungseinrichtung als auch auf die Messeinrichtung wirkt.

Die räumliche Konzentration der Handhabungseinrichtung und der Messeinrichtung führt zu einer lediglich geringen Reduzierung des theoretisch möglichen Bauraums für zu bearbeitende Werkstücke. Daneben erfolgt das Verfahren der Handhabungseinrichtung und der Messeinrichtung entlang derselben Bahn. Somit muss bei der Steuerung und Überwachung der Werkzeugmaschine, etwa bei der Kollisionsüberwachung, nicht auf eine Mehrzahl möglicher Bewegungsbahnen (Verfahrbahnen) separat realisierter Komponenten geachtet werden.

Erfindungsgemäß weisen die Handhabungseinrichtung und die Messeinrichtung miteinander verbundene Grundkörper auf, die im Wesentlichen relativ zueinander starr gekoppelt sind.

Am Grundkörper der Handhabungseinrichtung kann etwa das zumindest eine Handhabungsorgan aufgenommen sein. Am Grundkörper der Messeinrichtung kann etwa das zumindest eine Messorgan aufgenommen sein. Es ist grundsätzlich vorstellbar, die Handhabungseinrichtung und die Messeinrichtung mit einem gemeinsamen Grundkörper zu versehen und über diesen mit dem Positionierantrieb zu koppeln. Es ist jedoch ebenso vorstellbar, modulartig zwei Grundkörper mittelbar oder unmittelbar starr miteinander zu verknüpfen.

Somit kann beispielhaft durch eine Verlagerung des Grundkörpers der Handhabungseinrichtung ohne weiteren Aufwand die mit der Handhabungseinrichtung gekoppelte Messeinrichtung gleichsam verlagert werden.

Der Positionierantrieb ist dazu ausgebildet, die Handhabungseinrichtung und die Messeinrichtung relativ zu einer durch die Werkstückaufnahme definierten Längsachse zu verlagern.

Die Längsachse kann einer Längsachse eines eingespannten Werkstücks entsprechen, das durch die Handhabungseinrichtung zugeführt wurde. Mit anderen Worten kann die Verlagerung mit dem Positionierantrieb darauf ausgerichtet sein, die Längsachse des Werkzeugs mit der Längsachse der Werkstückaufnahme zumindest näherungsweise in Übereinstimmung zu bringen.

Die Verlagerung der Handhabungseinrichtung (und der mit dieser gekoppelten Messeinrichtung) kann etwa eine Bewegung umfassen, die zumindest abschnittsweise in einer Ebene erfolgt, die senkrecht zur Längsachse ist. Es kann ferner von Vorteil sein, wenn die Verlagerung entlang eines Bewegungspfads erfolgt, der zumindest abschnittsweise radial in Richtung auf die Längsachse gerichtet ist.

Der Positionierantrieb ist als Schwenkantrieb ausgebildet.

Der Positionierantrieb kann etwa als elektrischer oder fluidischer (hydraulischer oder pneumatischer) Antrieb gestaltet sein. In einfacher Weise kann der Positionierantrieb dazu ausgestaltet sein, eine repetierende Hin- und Her-Bewegung zu ermöglichen. Für den Positionierantrieb können beispielhaft Anschläge oder Endpunkte vorgesehen sein, die die Arbeitsstellung und die zumindest eine Sekundärstellung kennzeichnen. Somit können die Arbeitsstellung und die zumindest eine Sekundärstellung in einfacher Weise ohne großen Regelaufwand oder Steuerungsaufwand reproduzierbar und hochgenau angefahren werden.

Es ist ohne weiteres vorstellbar, den als Schwenkantrieb ausgebildeten Positionierantrieb mit einem Koppelgetriebe zu kombinieren. Bei dem Koppelgetriebe kann es sich etwa um eine Kurbelschwinge handeln. Auf diese Weise kann beispielhaft eine kontinuierliche Antriebsbewegung in eine wiederkehrende Abtriebsbewegung überführt werden.

Gemäß einem weiteren Aspekt sind das zumindest eine Handhabungsorgan und das zumindest eine Messorgan zueinander benachbart angeordnet und insbesondere in Richtung der Längsachse axial hintereinander angeordnet.

Auf diese Weise können das zumindest eine Handhabungsorgan und das zumindest eine Messorgan entlang der Längsachse einen geringen axialen Bauraum einnehmen, so dass ein für das Werkstück bzw. für dessen Bearbeitung zur Verfügung stehender Bauraum nicht wesentlich eingeschränkt wird.

In einfacher Weise können etwa die Grundkörper der Handhabungseinrichtung und der Messeinrichtung benachbart und (entlang der Längsachse betrachtet) hintereinander angeordnet sein.

Es ist ferner bevorzugt, wenn die Handhabungseinrichtung und die Messeinrichtung an einem Schwenkarm des Positionierantriebs aufgenommen sind.

Auf diese Weise können die Handhabungseinrichtung und die Messeinrichtung in einfacher Weise miteinander verschwenkt werden, um von der Arbeitsstellung in die zumindest eine Sekundärstellung verlagert zu werden, und umgekehrt.

Gemäß einer vorteilhaften Weiterbildung sind die Handhabungseinrichtung und die Messeinrichtung mit dem Positionierantrieb als Teile eines Prozessmoduls ausgebildet, das mittelbar oder unmittelbar an einer gestellfesten Führung der Werkzeugmaschine gelagert ist.

Das Prozessmodul kann beispielhaft mittels eines eigenen Schlittens an der Führung aufgenommen sein. Das Prozessmodul kann jedoch ebenso auch beispielhaft an einer Werkstückspindel oder an einem Reitstock der Werkstückaufnahme angeordnet sein. Somit kann das Prozessmodul mittelbar an der Führung aufgenommen sein. Auf diese Weise kann das Prozessmodul besonders platzsparend an der Werkstückspindel oder am Reitstock angebracht werden. Ein Zwischenraum zwischen der Werkstückspindel und dem Reitstock wird nicht wesentlich verbaut.

Gemäß einer vorteilhaften Weiterbildung weist die Handhabungseinrichtung einen Greifer auf, der zumindest eine Greifkonfiguration und eine Lösekonfiguration einnehmen kann.

Beispielhaft kann das zumindest eine Handhabungsorgan durch den Greifer implementiert sein. Der Greifer kann beispielhaft zumindest zwei Greifarme aufweisen.

In der Greifkonfiguration können die Greifarme aneinander angenähert sein. In der Lösekonfiguration können die Greifarme voneinander entfernt sein. Der Greifer kann das Werkstück zangenartig aufnehmen und halten. Auf diese Weise kann das Werkstück bei der Verlagerung zwischen der Arbeitsstellung und der zumindest einen Sekundärstellung sicher an der Handhabungseinrichtung fixiert und gehalten sein. In der Lösekonfiguration kann die Handhabungseinrichtung derart vom Werkstück gelöst sein, dass kein unmittelbarer (funktionaler) Kontakt zwischen dem Greifer und dem Werkstück besteht.

Es ist ferner von Vorteil, wenn die Messeinrichtung einen Messkopf aufweist, der zumindest einen Messtaster, insbesondere zumindest zwei einander zugewandte Messtaster, aufweist, der dazu ausgebildet ist, einen Abschnitt des Werkstücks umfänglich zu kontaktieren.

Der Messkopf kann beispielhaft U-förmig gestaltet sein, wobei jeweils ein Schenkel des U durch einen der Messtaster gebildet ist. Das Werkstück kann zumindest in der Arbeitsstellung von den Messtastern tangiert bzw. kontaktiert werden. Auf diese Weise können etwa ein Werkstückdurchmesser bzw. verwandte Größen erfasst und überwacht werden. Die Messtaster können grundsätzlich als taktile Messtaster ausgestaltet sein. Es ist jedoch auch vorstellbar, die Messtaster als berührungslose Messtaster auszuführen, beispielhaft als optische Messtaster.

Es ist ferner bevorzugt, wenn das zumindest eine Messorgan selektiv zwischen einer Messkonfiguration und einer Außereingriffkonfiguration verlagerbar ist.

Das zumindest eine Messorgan kann vorteilhaft durch den zumindest einen Messtaster verkörpert sein. Beispielhaft können der oder die Messtaster dazu ausgebildet sein, selektiv relativ zum Grundkörper der Messeinrichtung verlagert werden zu können, um vom Werkstück abheben zu können. Dieser Zustand kann vorteilhaft insbesondere während der gemeinsamen Bewegung der Messeinrichtung und der Handhabungseinrichtung eingenommen sein. Auf diese Weise können die Messtaster bei der Verlagerung geschützt werden.

In der Messkonfiguration liegen die Messtaster regelmäßig am Werkstück, etwa an einem Umfang des Werkstücks, an. In diesem Zustand kann der zumindest eine Werkstückparameter erfasst werden.

In der Außereingriffkonfiguration besteht keine unmittelbare (funktionale) Kopplung zwischen den Messtastern und dem Werkstück. Somit können sich ruckartige oder stoßartige Bewegungen des Werkstücks nicht nachteilig auf die Messtaster auswirken.

Gemäß einem weiteren Aspekt weist die Werkzeugmaschine ferner eine Steuereinrichtung auf, die dazu ausgebildet ist, die gemeinsame Verlagerung der Handhabungseinrichtung und der Messeinrichtung zwischen der Arbeitsstellung und der zumindest einen Sekundärstellung derart zu steuern, dass die Handhabungseinrichtung in der Arbeitsstellung zumindest während einer Hauptnutzungszeit, bei der insbesondere eine Bearbeitung des Werkstücks erfolgt, vom Werkstück entkoppelt ist, und dass die Messeinrichtung zumindest während der gemeinsamen Verlagerung vom Werkstück entkoppelt ist.

Unter Entkopplung oder Entkoppeln ist insbesondere das Lösen einer unmittelbaren (funktionalen) Kopplung oder Kontaktierung der Handhabungseinrichtung bzw. der Messeinrichtung mit dem Werkstück zu verstehen. Es versteht sich, dass eine mittelbare Kopplung im weiteren Sinne bestehen bleibt, da die Handhabungseinrichtung bzw. die Messeinrichtung aufgrund der gemeinsamen Kopplung mit dem Positionierantrieb miteinander verknüpft sind.

Eine Entkopplung kann insbesondere einen Zustand umfassen, in dem die Messtaster der Messeinrichtung bzw. der Greifer der Handhabungseinrichtung vom Werkstück gelöst oder entfernt sind.

Die Hauptnutzungszeit (oder: Hauptzeit) beschreibt im Wesentlichen die Zeit, in der eine tatsächliche Bearbeitung des Werkstücks erfolgt. Dies kann etwa einen tatsächlichen Eingriff des Werkzeugs, etwa der Schleifscheibe, am Werkstück beinhalten. Zumindest während der Hauptnutzungszeit kann die Handhabungseinrichtung vom Werkstück entkoppelt sein, um Beschädigungen etwa des Greifers oder des Werkstücks zu vermeiden. Es versteht, dass die gewünschte Entkopplung beispielhaft bereits durch ein leichtes Abheben von Greifarmen des Greifers realisiert werden kann. Insbesondere ist für die Entkopplung kein Verfahren der Handhabungseinrichtung mit dem Positionierantrieb erforderlich. In ähnlicher Weise kann die Entkopplung der Messeinrichtung vom Werkstück in einfacher Weise durch leichtes Abheben der Messtaster erfolgen.

Das wechselseitige Koppeln und Entkoppeln entweder der Handhabungseinrichtung oder der Messeinrichtung mit dem Werkstück kann die gemeinsame Nutzung des Positionierantriebs zur gemeinsamen Verlagerung vereinfachen. Insbesondere kann eine wechselseitige Beeinflussung der Handhabungseinrichtung durch die Messeinrichtung und umgekehrt unterbunden werden.

Gemäß einer Weiterbildung dieser Ausgestaltung ist die Steuereinrichtung ferner dazu ausgebildet, die Werkstückaufnahme anzusteuern, um in der Arbeitsstellung zumindest eine Übergabe des Werkstücks zwischen der Handhabungseinrichtung und der Werkstückaufnahme zu erlauben.

Somit kann das Werkstück in der Arbeitsstellung durch die Werkstückaufnahme aufgenommen bzw. an dieser fixiert sein. Daher kann die Handhabungseinrichtung vom Werkstück entkoppelt zu werden, wobei die Lage und Orientierung des Werkstücks definiert ist. Insbesondere dann, wenn das Werkstück an der Werkstückaufnahme aufgenommen ist, kann die Messeinrichtung mit dem Werkstück gekoppelt werden, um den zumindest einen Werkstückparameter erfassen zu können. Die Aufnahme des Werkstücks an der Werkstückaufnahme kann grundsätzlich hochgenau erfolgen. Somit können in der Arbeitsstellung nachteilige Auswirkungen auf die Messeinrichtung, die beispielhaft durch stoßartige oder ruckartige Bewegungen der Handhabungseinrichtung bedingt sein können, vermieden werden.

Gemäß einem weiteren Aspekt ist in zumindest einer Sekundärstellung zumindest eine Übernahme oder Abgabe des Werkstücks durch die Handhabungseinrichtung ermöglicht.

Die Übernahme oder Abgabe kann, bezogen etwa auf Systemgrenzen der Werkzeugmaschine, nach "außen" oder von "außen" erfolgen. Zu diesem Zweck kann die Handhabungseinrichtung in der zumindest einen Sekundärstellung mit externen Handlingeinrichtungen oder Handlingmodulen gekoppelt werden. Hierbei kann es sich etwa um externe Fördereinrichtungen, Lager, Greifer oder Ähnliches handeln.

In vorteilhafter Weise kann die Sekundärstellung in einem Bereitstellungsraum definiert sein, in dem die Werkzeugmaschine von außen besonders gut zugänglich ist.

Es ist gemäß einer Ausgestaltung besonders bevorzugt, wenn die Übernahme und Abgabe des Werkstücks in genau einer Sekundärstellung der Handhabungseinrichtung erfolgen kann. Auf diese Weise kann in ein und derselben Sekundärstellung ein bearbeitetes Werkstück abgegeben und ein neues (unbearbeitetes) Werkstück übernommen werden. Gemäß einer alternativen Ausgestaltung kann eine erste Sekundärstellung für die Übernahme und eine zweite Sekundärstellung für die Abgabe von Werkstücken vorgesehen sein. Auf diese Weise kann ein Materialfluss optimiert werden.

Gemäß einer weiteren bevorzugten Ausgestaltung ist der Handhabungseinrichtung eine Abgabestrecke zugeordnet, die insbesondere eine Abgaberampe mit einer zumindest teilweise geneigten Fläche aufweist und zum Abführen eines abzugebenden Werkstücks ausgebildet ist.

Auf diese Weise können bearbeitete Werkstück im Wesentlichen selbsttätig, beispielsweise durch Schwerkraft bedingt, abgeführt werden. Bei dieser Gestaltung können etwa zwei Sekundärstellungen erforderlich sein. Beispielhaft kann in der ersten Sekundärstellung eine Übernahme neuer (unbearbeiteter) Werkstücke erfolgen. In der zweiten Sekundärstellung kann eine Abgabe der bearbeiteten Werkstücke an die Abgaberampe erfolgen. Die Abgaberampe kann gestellfest oder aber einschwenkbar bzw. zustellbar ausgebildet sein.

Gemäß einer weiteren Ausgestaltung weist die Handhabungseinrichtung eine Stützeinrichtung auf, insbesondere eine Lünette mit einer Mehrzahl von Kontaktelementen, die dazu ausgebildet ist, das Werkstück in der Arbeitsstellung abzustützen und beim Wechsel zwischen der Arbeitsstellung und der zumindest einen Sekundärstellung zu führen.

Es versteht sich, dass die Handhabungseinrichtung nicht notwendigerweise als Greifeinrichtung mit Greiforganen ausgebildet sein muss. Vielmehr ist es vorstellbar, die Handhabungseinrichtung alternativ als Stützeinrichtung auszuführen, etwa als Lünette. Mittels einer Lünette können Werkstücke mit großem Längen-Durchmesser-Verhältnis bei der Bearbeitung geführt und gestützt werden. Hierzu können beispielhaft Kontaktelemente, etwa Kontaktrollen oder Gleitflächen, an das Werkstück angreifen und beispielsweise eine Dreipunktaufnahme bereitstellen. Eine solche Handhabungseinrichtung kann auch dazu genutzt werden, das Werkstück beim Übergang zwischen der Arbeitsstellung und der zumindest einen Sekundärstellung zu halten und zu führen.

Es sind verschiedene Gestaltungen von Lünetten bekannt, etwa solche mit einem geschlossenen oder mit einem offenen Aufbau. Hiervon abhängig kann das Werkstück der Lünette etwa radial oder axial zugeführt werden. Es sind ferner auch Lünetten bekannt, bei denen ein zunächst geschlossener Ring geöffnet werden kann, um ein Werkstück zu Führungszwecken aufzunehmen. Lünetten können ferner dazu ausgebildet sein, das Werkstück innerhalb eines Drehlagers aufzunehmen, das eine Verdrehbarkeit des Werkstück ermöglicht.

Auch mit einer als Stützeinrichtung ausgebildeten Handhabungseinrichtung kann eine Bauraumeinsparung bzw. eine Erhöhung des maximal nutzbaren Bauraums für das Werkstück bewirkt werden. Die Kopplung der Handhabungseinrichtung mit der Messeinrichtung kann auch in diesem Fall zu einer Teilereduktion führen. Die Handhabungseinrichtung und die Messeinrichtung können beispielsweise gemeinsam entlang des (eingespannten) Werkstücks verfahren werden, um einem Bearbeitungsfortschritt, etwa einer Vorschubbewegung, zu folgen.

Die Aufgabe der Erfindung wird ferner gelöst durch ein Verfahren zur automatisierten spanenden Bearbeitung von Werkstücken, insbesondere zum Schleifen von Werkstücken in einer Schleifmaschine, mit den folgenden Schritten:
- Übernahme eines zu bearbeitenden Werkstücks mittels einer Handhabungseinrichtung in einer Sekundärstellung, wobei die Handhabungseinrichtung gemeinsam mit einer Messeinrichtung mit einem Positionierantrieb gekoppelt ist, wobei die Handhabungseinrichtung und die Messeinrichtung gemeinsam durch den Positionierantrieb zwischen einer Arbeitsstellung, in der eine Bearbeitung des Werkstücks ermöglicht ist, und zumindest einer Sekundärstellung, in der ein Beladevorgang oder Entladevorgang ermöglicht ist, verlagerbar sind, wobei die Handhabungseinrichtung und die Messeinrichtung miteinander verbundene Grundkörper aufweisen, die relativ zueinander starr gekoppelt sind, wobei der Positionierantrieb dazu ausgebildet ist, die Handhabungseinrichtung und die Messeinrichtung relativ zu einer durch die Werkstückaufnahme definierten Längsachse zu verlagern, und wobei der Positionierantrieb als Schwenkantrieb ausgebildet ist;
- Verlagern der Handhabungseinrichtung mit dem Werkstück aus der Sekundärstellung in die Arbeitsstellung durch den Positionierantrieb;
- Aufnahme des Werkstücks durch eine Werkstückaufnahme;
- Entkoppeln der Handhabungseinrichtung vom Werkstück;
- Koppeln der Messeinrichtung mit dem Werkstück;
- Bearbeiten des Werkstücks, insbesondere Schleifen des Werkstücks;
- Entkoppeln der Messeinrichtung vom Werkstück; Koppeln der Handhabungseinrichtung mit dem Werkstück; und
- Verlagern der Handhabungseinrichtung mit dem Werkstück aus der Arbeitsstellung in die Sekundärstellung zur Abgabe des Werkstücks durch den Positionierantrieb.

Es kann sich insbesondere die Abgabe des Werkstücks in der Sekundärstellung an externe Handhabungseinrichtungen anschließen. Die Schritte können wiederholt werden, um eine automatisierte Bearbeitung einer Mehrzahl von Werkstücken zu ermöglichen.

Es versteht sich, dass der Schritt des Koppelns der Messeinrichtung mit dem Werkstück grundsätzlich auch während oder nach der Bearbeitung des Werkstücks ausgeführt werden kann. Insbesondere ist es nicht notwendigerweise der Fall, dass die Messeinrichtung zwingend mit dem Werkstück zu koppeln ist, bevor eine Bearbeitung einsetzen kann. Beispielhaft kann zunächst eine Bearbeitung in Form einer Grobbearbeitung oder Schruppbearbeitung erfolgen, bei der zunächst keine Erfassung des zumindest einen Werkstückparameters geplant ist. Es kann sich eine Feinbearbeitung oder Finishbearbeitung anschließen, bei der die Messeinrichtung zu Überwachungszwecken mit dem Werkstück gekoppelt ist.

Bei der Sekundärstellung für die Übernahme und der Sekundärstellung für die Abgabe des Werkstücks kann es sich grundsätzlich um ein und dieselbe einzige Sekundärstellung handeln. Es ist jedoch auch vorstellbar, eine erste Sekundärstellung für die Übernahme sowie eine davon verschiedene zweite Sekundärstellung für die Abgabe vorzusehen.

Die Verlagerung der Handhabungseinrichtung impliziert auch eine Verlagerung der Messeinrichtung, die gemeinsam mit der Handhabungseinrichtung mit dem Positionierantrieb gekoppelt ist.

Das Verfahren kann insbesondere mit einer Werkzeugmaschine nach einem der vorgenannten Aspekte durchgeführt werden. Es versteht sich, dass auch das Verfahren gemäß einem oder mehreren Aspekten der vorgenannten Werkzeugmaschine weitergebildet sein kann.

Weitere Merkmale und Vorteile der Erfindung ergeben sich aus der nachfolgenden Beschreibung und Erläuterung mehrerer bevorzugter Ausführungsbeispiele unter Bezugnahme auf die Zeichnungen. Es zeigen:
- Fig. 1: eine perspektivische Ansicht einer als Schleifmaschine ausgebildeten Werkzeugmaschine mit einer Einhausung, die teilweise gebrochen dargestellt ist;
- Fig. 2: eine Draufsicht einer Werkzeugmaschine;
- Fig. 3: eine seitliche Ansicht einer Werkstückspindel, die einer Werkstückaufnahme zugeordnet ist;
- Fig. 4a: eine seitliche Ansicht eines Prozessmoduls, das eine Handhabungseinrichtung und eine Messeinrichtung aufweist, bei der Verlagerung zwischen einer Sekundärstellung und einer Arbeitsstellung;
- Fig. 4b: eine weitere seitliche Ansicht des Prozessmoduls gemäß Fig. 4a beim Erreichen einer Arbeitsstellung;
- Fig. 4c: eine weitere seitliche Ansicht des Prozessmoduls gemäß Fig. 4b in der Arbeitsstellung, wobei die Handhabungseinrichtung vom Werkstück entkoppelt ist und die Messeinrichtung mit dem Werkstück gekoppelt ist;
- Fig. 4d: eine weitere seitliche Ansicht des Prozessmoduls gemäß Fig. 4b, wobei die Handhabungseinrichtung mit dem Werkstück gekoppelt ist und die Messeinrichtung vom Werkstück entkoppelt ist, um gemeinsam aus der Arbeitsstellung verlagert zu werden;
- Fig. 5: eine seitliche Ansicht etwa der Werkstückspindel gemäß Fig. 3 sowie des Prozessmoduls etwa gemäß den Figuren 4a bis 4d, wobei verschiedene Bereitstellungsräume dargestellt sind;
- Fig. 6: eine seitliche Ansicht eines gegenüber der Darstellung in Fig. 5 abgewandelten Prozessmoduls, dem eine Abgaberampe zugeordnet ist;
- Fig. 7a und 7b: zwei Draufsichten beispielhafter Konfigurationen von Werkstückaufnahmen, die mit Prozessmodulen gekoppelt sind;
- Fig. 8: eine seitliche Ansicht eines gegenüber der Darstellung in Fig. 4a abgewandelten Prozessmoduls; und
- Fig. 9: ein schematisches, vereinfachtes Flussdiagramm eines beispielhaften Verfahrens zur Bearbeitung von Werkstücken, insbesondere zum Schleifen von Werkstücken in einer Schleifmaschine.

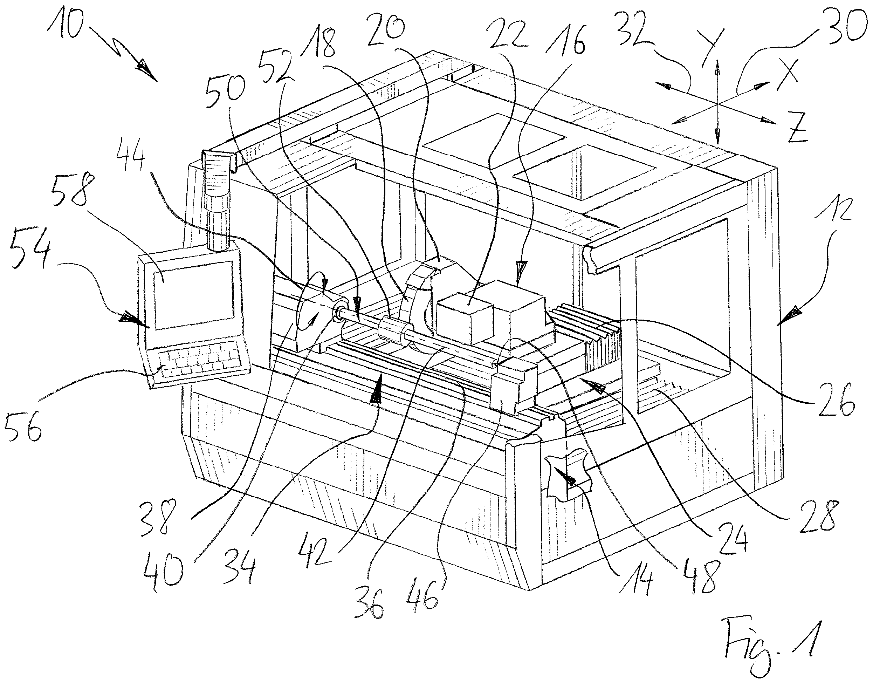

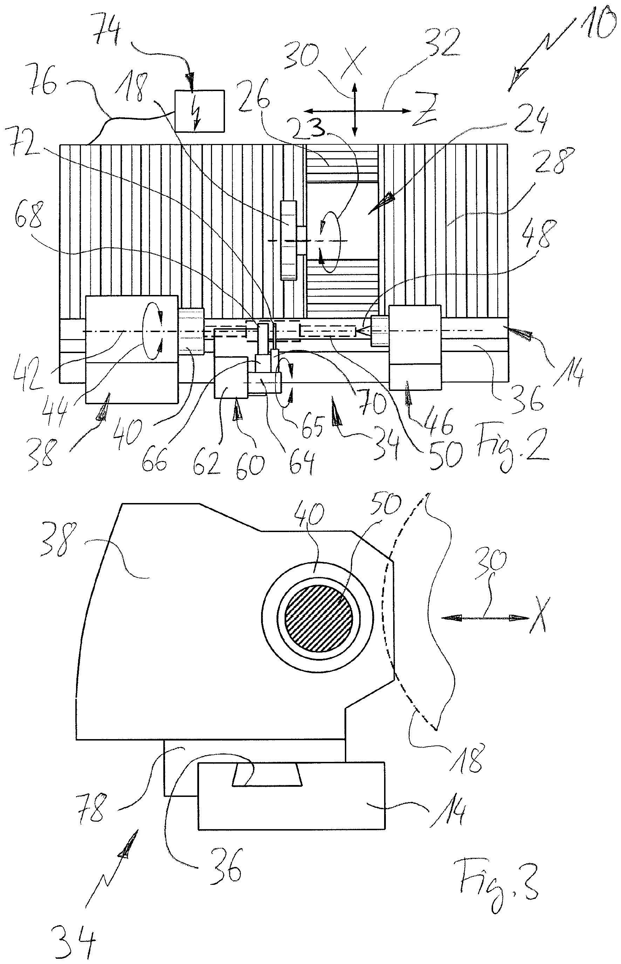

In Fig. 1 ist eine Werkzeugmaschine perspektivisch dargestellt und insgesamt mit 10 bezeichnet. Fig. 2 zeigt eine korrespondierende Draufsicht etwa der Werkzeugmaschine 10 gemäß Fig. 1, wobei aus Veranschaulichungsgründen verschiedene Komponenten ausgeblendet sind.

Die Werkzeugmaschine 10 ist vorliegend als Schleifmaschine ausgebildet, insbesondere als Rundschleifmaschine, allgemein auch als Horizontalschleifmaschine. Es versteht sich, dass die Werkzeugmaschine 10 grundsätzlich auch als Vertikalschleifmaschine konfiguriert sein kann. Die Werkzeugmaschine 10 weist eine Einhausung 12 auf, die als Gehäuse fungiert. Die Einhausung 12 ist in Fig. 1 teilweise gebrochen dargestellt. Die Einhausung 12 kann einen Prozessraum definieren, der nach außen abgeschlossen ist oder abschließbar ist. Die Einhausung 12 erlaubt insbesondere bei automatisierten Bearbeitungsvorgängen eine sichere Abgrenzung des Prozessraums der Werkzeugmaschine 10. Auf diese Weise kann eine grundsätzlich von beweglichen Komponenten ausgehende Gefahr minimiert werden. Ferner kann ein unerwünschter Austritt von Schmiermittel, Kühlflüssigkeit oder von Spänen in die Umgebung unterbunden werden. Die Einhausung 12 kann in geeigneter Weise mit Türen oder Klappen versehen sein, um den Prozessraum der Werkzeugmaschine 10 zugänglich zu machen. Es versteht sich, dass die Werkzeugmaschine 10 grundsätzlich auch ohne eine vollständig umhüllende Einhausung 12 gestaltet sein kann. So kann etwa eine lediglich abschnittsweise Einhausung 12 vorgesehen sein, beispielhaft eine zaunartige Einhausung 12.

Die Werkzeugmaschine 10 weist ein Maschinenbett 14 auf, das allgemein auch als Gestell oder Maschinentisch bezeichnet werden kann. Das Maschinenbett 14 kann eine präzise Lagerung und Führung von Komponenten der Werkzeugmaschine 10 unter Vermeidung von Deformationen oder Verformungen ermöglichen. Mit dem Maschinenbett 14 ist (zumindest mittelbar) ein Spindelkopf 16 gekoppelt, an dem ein Bearbeitungswerkzeug aufgenommen ist. Der Spindelkopf 16 kann auch als Schleifkopf bezeichnet werden. Vorliegend handelt es sich bei dem Werkzeug um eine Schleifscheibe 18, die mit dem Spindelkopf 16 gekoppelt ist und durch einen Spindelantrieb 22 antreibbar ist, vgl. auch einen mit 23 bezeichneten Pfeil in Fig. 2. Die Schleifscheibe 18 kann durch den Spindelantrieb 22 in Rotationen versetzt werden und mit einem Werkstück zur Materialabtragung zusammenwirken. Die Schleifscheibe 18 kann mit einer Schutzhaube 20 versehen sein.

Es versteht sich, dass die Werkzeugmaschine 10 alternativ auch eine Mehrzahl von Werkzeugen, insbesondere Schleifscheiben 18 aufweisen kann. Beispielhaft können am Spindelkopf 16 zwei Schleifscheiben 18 vorgesehen sind, die für eine Bearbeitung selektiv einschwenkbar sind. Eine derartige Funktionalität kann etwa als sogenannte B-Achsen-Funktionalität beschrieben werden. Daneben ist es vorstellbar, sogenannte Revolver vorzusehen, die eine Mehrzahl von Schleifscheiben 18 für die Bearbeitung bereitstellen.

Die Kopplung des Spindelkopfes 16 mit dem Maschinenbett 14 erfolgt beispielhaft unter Verwendung eines Kreuztisches 24. Der Kreuztisch 24 kann eine erste Führung 26 und eine zweite Führung 28 bereitstellen. Die erste Führung 26 kann ein Verfahren des Spindelkopfes 16 entlang einer X-Achse erlauben, vgl. einen mit 30 bezeichneten Pfeil. Die zweite Führung 28 kann ein Verfahren des Spindelkopfes 16 in einer Z-Richtung erlauben, vgl. einen mit 32 bezeichneten Pfeil. Insgesamt ist in Fig. 1 beispielhaft ein korrespondierendes Koordinatensystem X-Y-Z dargestellt. Es versteht sich, dass die Zuordnung des Koordinatensystems X-Y-Z zur Werkzeugmaschine 10 bzw. zu deren Komponenten grundsätzlich auch in anderer Weise erfolgen kann. Insbesondere können Achsenbezeichnungen anderen Orientierungen zugeordnet sein. Es versteht sich ferner, dass die vorangehenden und nachfolgenden Aussagen ohne weiteres auf (transformierte) abgewandelte Koordinatensysteme übertragbar sind. In gleicher Weise können auch allgemeine Richtungsangaben, Drehrichtungsangaben, Angaben zu relativen Zuordnungen, die sich etwa auf bestimmte Figuren beziehen, grundsätzlich auch auf andere Figuren mit abgewandelten Blickrichtungen bzw. Ansichtsorientierungen übertragen werden.

Mit dem Maschinenbett 14 der Werkzeugmaschine 10 ist ferner eine Werkstückaufnahme 34 gekoppelt, die der Aufnahme und Fixierung eines zu bearbeitenden Werkstücks 50 dienen kann. Beispielhaft ist die Werkstückaufnahme 34 an einer Führung 36 aufgenommen, die dem Maschinenbett 14 zugeordnet ist. Die Führung 36 kann grundsätzlich parallel zur Z-Achse verlaufen, vgl. Pfeil 32. Der Spindelkopf 16 mit dem daran aufgenommenen Werkzeug (Schleifscheibe 18) kann relativ zur Werkstückaufnahme 34 verfahren werden, um eine gewünschte Bearbeitung des Werkstücks 50 zu ermöglichen. Die Verfahrbewegung des Spindelkopfes 16 kann über geeignete Antriebe realisiert werden, die beispielsweise mit dem Kreuztisch 24 gekoppelt sind.

Die Werkstückaufnahme 34 weist beispielhaft eine Werkstückspindel 38 auf, die mit einer Spanneinrichtung 40 für das Werkstück 50 versehen ist. Bei der Spanneinrichtung 40 kann es sich beispielhaft um ein Spannfutter handeln. Die Spanneinrichtung 40 kann grundsätzlich ebenso auch durch eine (Zentrier-)Spitze und/oder einen Spannkonus, Spannbacken oder Ähnliches implementiert sein. Die Werkstückspindel 38 kann ferner einen Spindelantrieb aufweisen, der es erlaubt, die Spanneinrichtung 40 mit dem daran aufgenommenen Werkstück 50 definiert um eine Längsachse 42 zu verdrehen, vgl. einen mit 44 bezeichneten Pfeil. Eine derartige Funktionalität kann eine sogenannte C-Achsen-Bearbeitung erlauben. Der bei der Werkstückspindel 38 fakultativ vorgesehene Antrieb kann beispielhaft derart ausgelegt und gesteuert sein, dass das Werkstück 50 hochgenau um die Achse 42 (die C-Achse) verdreht werden kann. Die C-Achsen-Bearbeitung erlaubt die Bearbeitung unrunder Werkstücke 50. Zu diesem Zweck kann die Werkzeugmaschine 10 über geeignete Steuerungs- und Regelungsorgane verfügen, um das Werkstück 50 definiert um die Achse 42 zu verdrehen und gleichzeitig das Werkzeug (Schleifscheibe 18) auf das Werkstück 50 zuzustellen bzw. von diesem wegzubewegen. Auf diese Weise können etwa Nockenwellen, Kurbelwellen oder Ähnliches bearbeitet werden.

Unabhängig davon, ob die Werkstückspindel 38 der Werkstückaufnahme 34 zur C-Achsen-Bearbeitung ausgebildet ist oder nicht, kann die Längsachse 42 zumindest durch die Spanneinrichtung 40 definiert sein. Es versteht sich, dass bei einem aufgenommenen Werkstück 50 dessen Längsachse mit der durch die Werkstückaufnahme 34 definierten Längsachse 42 zusammenfallen kann.

Die Werkstückaufnahme 34 weist ferner beispielhaft einen Reitstock 46 auf, der analog zur Werkstückspindel 38 mit einer Spanneinrichtung versehen sein kann. Vorliegend weist der Reitstock 46 beispielhaft eine Spitze 48, um das Werkstück 50 zentrieren zu können. Das Werkstück 50 kann grundsätzlich auch allein durch die Werkstückspindel 38 geführt und gehalten werden, ohne dass der Reitstock 46 erforderlich wäre. Insbesondere bei Werkstücken 50 mit hohem Längen-Durchmesser-Verhältnis kann sich jedoch eine zweiseitige Aufnahme mittels der Werkstückspindel 38 und dem Reitstock 46 empfehlen. Übermäßig lange Werkstücke 50 können ferner zusätzlich durch Lünetten, Rollen oder Auflager geführt und abgestützt werden (in den Figuren 1 und 2 nicht dargestellt). Es ist vorstellbar, die Werkstückspindel 38 bzw. den Reitstock 46 mit einem Linearantrieb zu versehen, um diese entlang der Führung 36 definiert und kontrolliert verfahren zu können.

Am Werkstück 50 ist beispielhaft ein Werkstückabschnitt 52 ausgebildet, der etwa mittels der Schleifscheibe 18 zu bearbeiten ist. Zu diesem Zweck kann die Schleifscheibe 18 rotatorisch angetrieben werden, vgl. Pfeil 23 in Fig. 2. Ferner kann die Schleifscheibe 18 entlang der X-Achse (radial) auf den Werkstückabschnitt 52 zugestellt bzw. von diesem entfernt werden. Auf diese Weise kann eine Bearbeitungstiefe beeinflusst werden. Eine Vorschubbewegung der Schleifscheibe 18 relativ zur Werkstückaufnahme 34 bzw. dem Werkstückabschnitt 52 des daran aufgenommenen Werkstücks 50 kann entlang der Z-Achse erfolgen. In den Figuren 1 und 2 sind die Führungen 26, 28 in der X-Richtung und der Z-Richtung für den Spindelkopf 16 beispielhaft durch vereinfacht dargestellte Faltenbälge, Manschetten oder ähnliche Schutzelemente verdeckt bzw. abgedichtet. Auf diese Weise kann ein Verfahrantrieb des Spindelkopfes 16 vor Verschmutzungen und Beschädigungen geschützt werden.

Die in Fig. 1 dargestellte Werkzeugmaschine 10 weist ferner eine Bedienerschnittstelle 54 auf, die außerhalb eines Prozessraums oder Innenraums der Werkzeugmaschine 10 angeordnet ist. Auf diese Weise kann ein Bediener die Werkzeugmaschine 10 steuern, programmieren, regeln oder etwa Diagnosen durchführen, ohne mit dem Innenraum der Werkzeugmaschine 10 in Kontakt zu kommen. Bei der Bedienerschnittstelle 54 kann es sich etwa um eine Bedieneinheit handeln, die zumindest eine Eingabeeinheit 56 und eine Ausgabeeinheit 58 aufweist. Die Eingabeeinheit 56 kann eine Tastatur, Drucktaster, Stellhebel oder Ähnliches aufweisen. Die Eingabeeinheit 56 kann jedoch auch berührungsempfindliche Flächen aufweisen. Bei der Ausgabeeinheit 58 handelt es sich üblicherweise um einen Bildschirm, ferner um alphanumerische Anzeigen, Kontrollleuchten, Skalen oder Ähnliches. Insbesondere dann, wenn etwa ein Bildschirm berührungsempfindlich gestaltet ist, können die Eingabeeinheit 56 und die Ausgabeeinheit 58 zumindest teilweise durch identische Bauteile verwirklicht sein.

Wie vorstehend bereits erwähnt, können bei der Werkzeugmaschine 10 verschiedene Beschickungskonzepte (Werkstückwechselkonzepte) genutzt werden. Abhängig von einem gewünschten Automatisierungsgrad kann grundsätzlich eine manuelle Beschickung oder eine automatisierte Beschickung erfolgen. Die manuelle Beschickung bietet sich insbesondere für Einzelfertigungen an. Eine möglichst vollautomatische Beschickung kann sich für Großserienbearbeitungen anbieten. Für die Fertigung und Bearbeitung mittlerer Serien können sich zumindest teilweise automatisierte Beschickungssysteme anbieten, die einen hinreichenden Kompromiss zwischen Beschickungszeiten, Anlagekosten, Flexibilität und der Berücksichtigung weiterer Randbedingungen erlauben können.

Ferner besteht häufig das Bedürfnis, eine integrierte Erfassung zumindest eines Werkstückparameters zu ermöglichen, etwa um einen Bearbeitungsfortschritt überwachen zu können. Hierzu eignen sich beispielhaft In-Prozess-Messungen, die eine permanente oder nahezu permanente Überwachung des Werkstücks, insbesondere auch während der Bearbeitung erlauben.

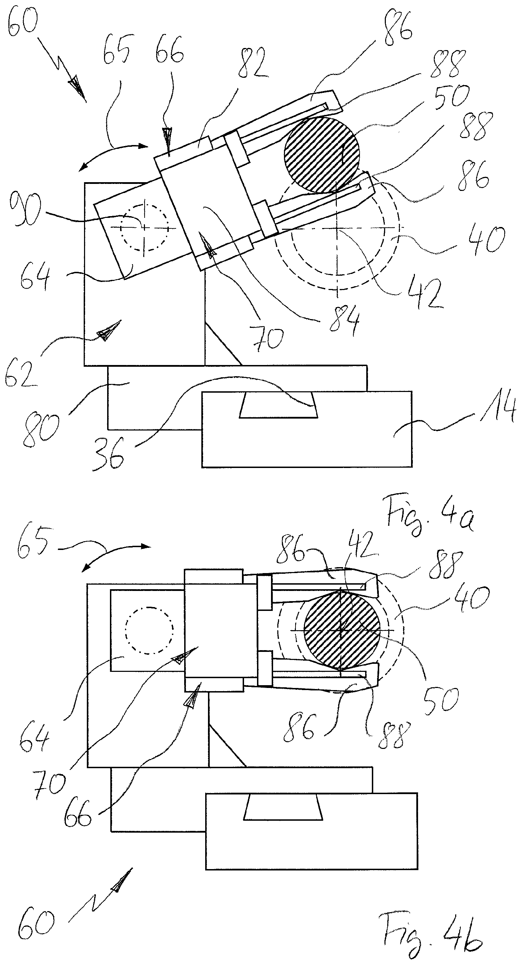

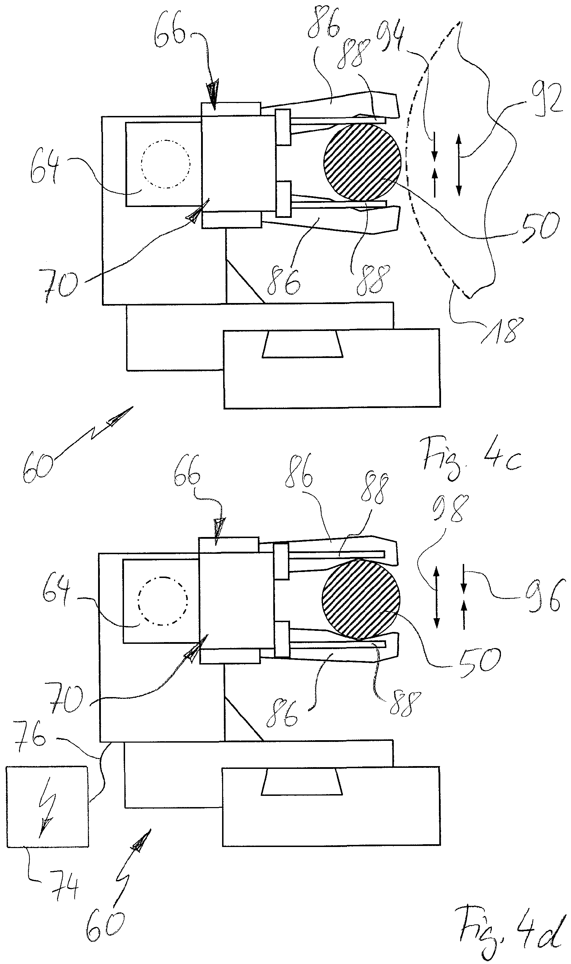

Die in Fig. 2 dargestellte Werkzeugmaschine 10 weist ein Prozessmodul 60 auf, das in einfacher Weise einen automatisierten Werkstückwechsel sowie eine integrierte Überwachung bzw. Vermessung des Werkstücks 50 bereitstellen kann. Aus Veranschaulichungsgründen ist das Werkstück 50 in Fig. 2 lediglich mittels gestrichelter Linien angedeutete. Zur Ergänzung der Darstellung der Werkzeugmaschine 10 in Fig. 2 können die Darstellungen in Fig. 3 und in den Figuren 4a bis 4d herangezogen werden. Fig. 3 zeigt beispielhaft eine seitliche Ansicht der Werkstückspindel 38, wobei eine Blickrichtung grundsätzlich mit der Z-Achse korrespondieren kann. Die Figuren 4a, 4b, 4c und 4d zeigen seitliche Ansichten des Prozessmoduls 60, wobei die jeweilige Blickrichtung ebenso mit der Z-Achse korrespondieren kann.

Das Prozessmodul 60 kann mittelbar oder unmittelbar mit dem Maschinenbett 14 gekoppelt sein. Beispielhaft ist das Prozessmodul 60 in Fig. 2 an der Führung 36 aufgenommen. Das Prozessmodul 60 weist einen Positionierantrieb 62 auf, etwa einen Stellmotor. Der Positionierantrieb 62 ist dazu ausgebildet, einen Schwenkarm 64 definiert zwischen einer Arbeitsstellung und zumindest einer Sekundärstellung zu verschwenken, vgl. einen mit 65 bezeichneten Pfeil. Der Positionierantrieb 62 kann den Schwenkarm 64 direkt antreiben.

Das Prozessmodul 60 weist ferner eine Handhabungseinrichtung 66 mit zumindest einem Handhabungsorgan 68 sowie eine Messeinrichtung 70 mit zumindest einem Messorgan 72 auf (vgl. Fig. 2). Die Handhabungseinrichtung 66 und die Messeinrichtung 70 sind gemeinsam mit dem Positionierantrieb 62 gekoppelt und können gemeinsam durch den Positionierantrieb 62 verschwenkt werden. Es ist vorstellbar, sowohl die Handhabungseinrichtung 66 als auch die Messeinrichtung 70 direkt mit dem Schwenkarm 64 zu koppeln. Ebenso ist es vorstellbar, etwa die Handhabungseinrichtung 66 direkt am Schwenkarm 64 aufzunehmen und die Messeinrichtung 70 direkt mit der Handhabungseinrichtung 66 und somit indirekt mit dem Schwenkarm 64 zu verknüpfen.

Bei dem zumindest einen Handhabungsorgan 68 kann es sich beispielhaft um einen Greifer handeln. Der Greifer kann grundsätzlich als mechanischer Greifer, pneumatischer Greifer, magnetischer Greifer ebenso jedoch beispielsweise auch als Adhäsionsgreifer ausgebildet sein. Ein mechanischer Greifer kann zumindest einen Greifarm (oder: Finger), vorzugsweise jedoch eine Mehrzahl von Greifarmen aufweisen. Vorzugsweise ist zumindest ein Greifarm beweglich gestaltet, um ein Greifen, Halten und Tragen des Werkstücks 50 ermöglichen zu können.

Bei dem zumindest einen Messorgan 72 kann es sich beispielhaft um einen Messkopf handeln, der einen oder mehrere Messtaster aufweist. Es sind grundsätzlich taktile Messköpfe oder optische Messköpfe denkbar. Messtaster können als sogenannte schaltende Messtaster, alternativ auch als sogenannte messende Messtaster ausgestaltet sein. Schaltende Messtaster können etwa auf das Erreichen einer Kraftschwelle beim Antasten reagieren. Messende Messtaster können grundsätzlich auslenkbar sein, wobei deren Auslenkung ermittelbar ist, um Rückschlüsse auf ein Messergebnis zu erlauben.

Insgesamt kann die Handhabungseinrichtung 66 mit dem zumindest einen Handhabungsorgan 68 dazu ausgestaltet sein, das Werkstück 50 in der Arbeitsstellung und der zumindest einen Sekundärstellung selektiv greifen oder freigeben zu können und beim Übergang zwischen der Arbeitsstellung und der zumindest einen Sekundärstellung für einen sicheren Halt des Werkstücks 50 zu sorgen.

Die Messeinrichtung 70 mit dem zumindest einen Messorgan 72 ist vorrangig dazu ausgestaltet, in der Arbeitsstellung ein Erfassen des zumindest einen Werkstückparameters zu erlauben. Dies kann beispielsweise im Rahmen einer In-Prozess-Messung erfolgen.

Unter dem Begriff "Arbeitsstellung" kann die Stellung des Prozessmoduls 60 bzw. der mit diesem gekoppelten Handhabungseinrichtung 66 sowie Messeinrichtung 70 verstanden werden, in der das Werkstück 50 in eine Lage verbracht ist, in der es von der Werkstückaufnahme 34 aufgenommen und gehalten werden kann. In der Arbeitsstellung kann das Werkstück 50 bearbeitet werden. Mit anderen Worten kann das Werkstück 50 in der Arbeitsstellung des Prozessmoduls 60 etwa derart auf die Werkstückaufnahme 34 zugeführt sein, dass eine Längsachse des Werkstücks 50 im Wesentlichen mit der durch die Werkstückaufnahme 34 definierten Längsachse 42 in Übereinstimmung gebracht ist, bzw. mit dieser zusammenfällt.

Bei der zumindest einen "Sekundärstellung" kann es sich um eine Stellung des Prozessmoduls 60 handelt, in der eine Abgabe eines bearbeiteten Werkstücks 50 nach außen bzw. eine Übernahme eines neuen (unbearbeiteten) Werkstücks 50 durch die Handhabungseinrichtung 66 ermöglicht ist. Es ist vorstellbar, die Übernahme und Abgabe in ein und derselben Sekundärstellung auszuführen. Ebenso ist es vorstellbar, etwa zwei Sekundärstellungen vorzusehen, von denen eine für die Abgabe und eine für die Übernahme des Werkstücks 50 genutzt wird.

In Fig. 2 ist ferner mit 74 eine Steuereinrichtung angedeutet, die etwa über zumindest eine Steuerleitung 76 mit Verfahrantrieben und Stellantrieben der Werkzeugmaschine 10 gekoppelt sein kann. Die Steuereinrichtung 74 kann insbesondere dazu ausgebildet sein, einen im Wesentlichen automatisierten Beladevorgang (oder: Beschickungsvorgang) mit einer im Wesentlichen automatisierten Bearbeitung des Werkstücks 50 zu kombinieren, wobei ferner die Messeinrichtung 70 eingebunden werden kann, um bei der Bearbeitung zumindest einen Werkstückparameter erfassen und überwachen zu können.

Sowohl die Handhabungseinrichtung 66 als auch die Messeinrichtung 70 können dazu ausgebildet sein, mit einem Abschnitt des Werkstücks 50 zusammenzuwirken, der im Wesentlichen einen konstanten Querschnitt (in seiner Längserstreckung oder Z-Richtung) aufweist. Es ist jedoch auch vorstellbar, die Handhabungseinrichtung 66 und die Messeinrichtung 70 an verschiedene Querschnitte, insbesondere abgestufte Querschnitte, des Werkstücks 50 anzupassen.

In Fig. 3 ist vorrangig aus Veranschaulichungsgründen eine seitliche Ansicht der Werkstückspindel 38 der Werkstückaufnahme 34 dargestellt. Das Werkstück 50 ist geschnitten dargestellt und durch die Spanneinrichtung 40 gehalten. Die Werkstückspindel 38 ist mittels eines Schlittens 78 am Maschinenbett 14 aufgenommen und an der Führung 36 gelagert. Das aufgenommene bzw. eingespannte Werkstück 50 kann mittels der lediglich teilweise dargestellten Schleifscheibe 18 bearbeitet werden. Die Schleifscheibe 18 kann beispielhaft entlang der X-Achse auf das Werkstück 50 zugestellt bzw. von diesem wegbewegt werden, vgl. Pfeil 30.

Anhand der Fig. 4a, 4b, 4c und 4d wird ein Zuführvorgang für das Werkstück 50 veranschaulicht, der Teil eines automatisierten Werkstückwechselvorgangs sein kann.

Das in Fig. 4a gezeigte Prozessmodul 60 ist mittels eines Schlittens 80 am Maschinenbett 14 aufgenommen und an der Führung 36 gelagert. Der Positionierantrieb 62 des Prozessmoduls 60 ist beispielhaft dazu ausgestaltet, den Schwenkarm 64 um eine Schwenkachse 90 zu verschwenken, vgl. Pfeil 65. Die Handhabungseinrichtung 66 weist einen Grundkörper 82 auf, der am Schwenkarm 64 aufgenommen ist. Die Messeinrichtung 70 weist einen Grundkörper 84 auf, der am Schwenkarm 64 aufgenommen ist. Die Grundkörper 82, 84 können gemeinsam mit dem Schwenkarm 64 durch den Positionierantrieb 62 verschwenkt bzw. verlagert werden. In Fig. 4a ist das zumindest eine Handhabungsorgan 68 der Handhabungseinrichtung 66 beispielhaft durch einen Greifer verkörpert, der Greifarme 86 aufweist. Das zumindest eine Messorgan 72 der Messeinrichtung 70 ist beispielhaft durch einen Messkopf verkörpert, der etwa zwei Messtaster 88 aufweisen kann.

In Fig. 4a sind die Greifarme 86 mit dem Werkstück 50 gekoppelt. Die Handhabungseinrichtung 66 befindet sich in einer Greifkonfiguration. Die Messtaster 88 sind vom Werkstück 50 abgehoben oder entkoppelt, die Messeinrichtung 70 befindet sich in einer Außereingriffkonfiguration. Bei dem in Fig. 4a dargestellten Werkstück 50 kann es sich beispielhaft um ein neues (unbearbeitetes) Werkstück 50 handeln. Die in Fig. 2 symbolhaft dargestellte Steuereinrichtung 74 kann dazu ausgebildet sein, das Prozessmodul 60 derart anzusteuern, dass die Handhabungseinrichtung 66 gemeinsam mit der Messeinrichtung 70 in die Arbeitsstellung überführt werden kann, in der das Werkstück 50 an die Spanneinrichtung 40 (in Fig. 4a lediglich mittels gestrichelter Linien angedeutet) übergeben werden kann. Diese Bewegung oder Verlagerung erfolgt gemeinsam für die Handhabungseinrichtung 66 und die Messeinrichtung 70. Diese Zwangskopplung erlaubt es, mittels lediglich einem Positionierantrieb 62 sowohl die Handhabungseinrichtung 66 als auch die Messeinrichtung 70 definierte in Relativlagen zum Werkstück 50 zu verbringen, um sowohl einen automatisierten Werkstückwechsel als auch eine integrierte Überwachung von Werkstückparametern zu erlauben.

In Fig. 4b befindet sich das Prozessmodul 60 in einer Arbeitsstellung, in der die Handhabungseinrichtung 66 und die Messeinrichtung 70 derart verlagert sind, dass das Werkstück 50 durch die Werkstückaufnahme 34 (hier verkörpert durch die Spanneinrichtung 40) übernommen werden kann. Zu diesem Zweck ist das Werkstück 50 etwa in eine Stellung verfahren, in der seine Längsachse mit der Längsachse 42 der Werkstückaufnahme 34 hinreichend in Überdeckung gebracht ist. Die Handhabungseinrichtung 66 kann solange in der Greifkonfiguration verharren, in der die Greifarme 86 mit dem Werkstück 50 gekoppelt sind, bis eine sichere Übergabe an die Spanneinrichtung 40 erfolgt ist. Es kann sich während dieses Vorgangs ferner empfehlen, die Messeinrichtung 70 vorerst in der Außereingriffkonfiguration zu belassen, um übermäßige Belastungen der (häufig empfindlichen) Messtaster 88 bei der Übergabe des Werkstücks 50 von der Handhabungseinrichtung 66 an die Spanneinrichtung 40 zu vermeiden.

In Fig. 4c befindet sich das Prozessmodul 60 weiterhin in der Arbeitsstellung. Es ist insbesondere kein weiteres Verfahren oder Verschwenken der Handhabungseinrichtung 66 und der Messeinrichtung 70 erfolgt. Jedoch befindet sich nunmehr die Handhabungseinrichtung 66 in einer Lösekonfiguration, in der die Greifarme 86 vom Werkstück 50 entkoppelt bzw. abgehoben sind, vgl. einen mit 92 bezeichneten Pfeil. Das Werkstück 50 ist in der Werkstückaufnahme 34 (in Fig. 4c nicht dargestellt) aufgenommen. Das Werkstück 50 kann mit der Schleifscheibe 18 bearbeitet werden. Die Bearbeitung des Werkstücks 50 kann mittels der Messeinrichtung 70 überwacht werden. Zu diesem Zweck ist die Messeinrichtung 70 in eine Messkonfiguration überführt, in der etwa die Messtaster 88 das Werkstück 50 beidseitig kontaktieren können. Auf diese Weise kann etwa ein Durchmesser des Werkstücks 50 erfasst und überwacht werden. Es versteht sich, dass auch andere Werkstückparameter erfasst werden können. Das Heranführen oder Koppeln der Messtaster 88 mit dem Werkstück 50 wird durch mit 94 bezeichnete Pfeile veranschaulicht.

Auch in Fig. 4d befindet sich das Prozessmodul 60 in der Arbeitsstellung. Die Bearbeitung des Werkstücks 50 ist abgeschlossen. Die Messtaster 88 der Messeinrichtung 70 sind vom Werkstück 50 abgehoben, vgl. einen mit 98 bezeichneten Pfeil. Die Messeinrichtung 70 befindet sich in der Außereingriffkonfiguration. Die Greifarme 86 der Handhabungseinrichtung 66 sind an das Werkstück 50 herangeführt und mit diesem gekoppelt, vgl. mit 96 bezeichnete Pfeile. Die Handhabungseinrichtung 66 befindet sich in der Greifkonfiguration. Wenn das Werkstück 50 sicher von der Handhabungseinrichtung 66 ergriffen ist, kann das Werkstück 50 von der Werkstückaufnahme 34 (in Fig. 4d nicht dargestellt) gelöst werden. Somit kann das Prozessmodul 60 ausgehend von der in Fig. 4d veranschaulichten Konfiguration in zumindest eine Sekundärstellung überführt werden, in der das bearbeitete Werkstück 50 abgegeben werden kann.

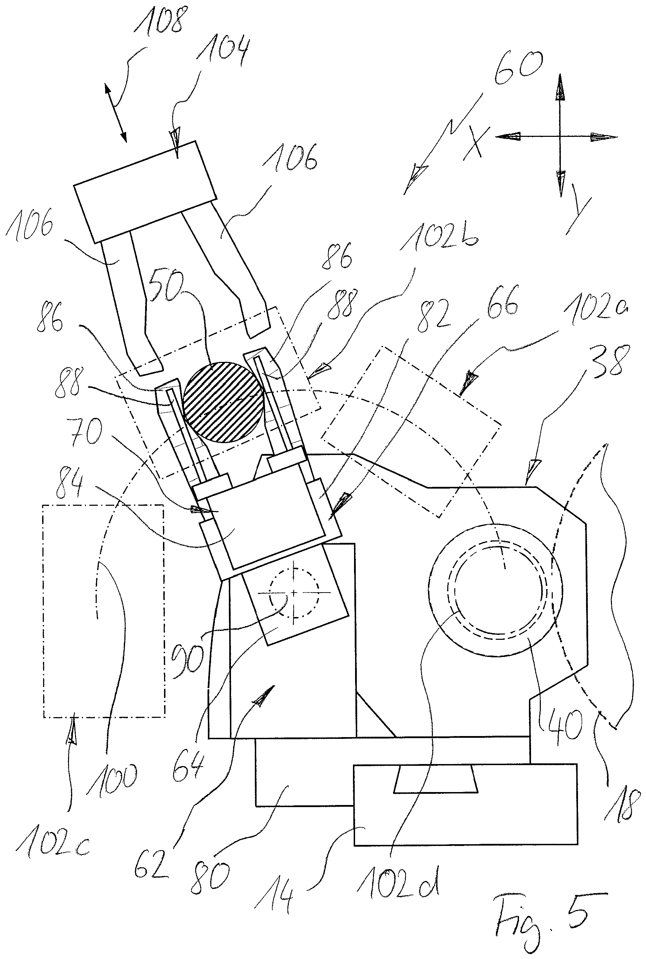

Fig. 5 veranschaulicht verschiedene Bereitstellungsräume oder Bereitstellungsbereiche 102, in denen eine Abgabe oder Übernahme des Werkstücks 50 durch die Handhabungseinrichtung 66 ermöglicht ist. Die Handhabungseinrichtung 66 kann gemeinsam mit der Messeinrichtung 70 entlang eines Pfads verfahren bzw. verschwenkt werden, der durch eine mit 100 bezeichnete strichpunktierte Linie veranschaulicht ist. Ausgehend von baulichen Randbedingungen, etwa der Gestaltung der Einhausung 12 der Werkzeugmaschine 10 (Fig. 1), kann die zumindest eine Sekundärstellung beispielhaft in einem der Bereitstellungsräume 102a, 102b, 102c gewählt werden. Die Bereitstellungsräume 102a und 102b können etwa eine Abgabe des Werkstücks 50 im Wesentlichen in einer Y-Richtung erlauben. Beispielhaft kann die Abgabe "nach oben" erfolgen. Der Bereitstellungsraum 102c erlaubt grundsätzlich eine Abgabe des Werkstücks 50 in der X-Richtung, also etwa eine Abgabe "nach vorne".

Beispielhaft befindet sich das Prozessmodul 60 in einer Sekundärstellung im Bereitstellungsraum 102b. Die Handhabungseinrichtung 66 kann mit einer externen Handlingeinheit 104 zusammenwirken, um das Werkstück 50 an diese übergeben und abführen zu können, vgl. einen mit 108 bezeichneten Pfeil. Zu diesem Zweck kann die externe Handlingeinheit 104 beispielhaft als Greifeinrichtung mit Greifarmen 106 ausgestaltet sein. In der Sekundärstellung sind die Messtaster 88 der Messeinrichtung 70 vom Werkstück 50 entkoppelt, um eine Beschädigung bei der Übergabe zu vermeiden. Die Messeinrichtung 70 befindet sich in der Außereingriffkonfiguration.

Es versteht sich, dass das vorstehend Gesagte grundsätzlich auch auf die Übernahme eines neuen Werkstücks 50 übertragbar ist, das einer Bearbeitung zugeführt werden soll.

Gemäß einer alternativen Ausgestaltung kann die Übernahme neuer Werkstücke 50 und die Abgabe bearbeiteter Werkstücke 50 an separaten Sekundärstellungen erfolgen. Auf diese Weise können etwa separate externe Handlingeinrichtungen sowohl für das Zuführen neuer Werkstücke 50 als auch für das Abführen bearbeiteter Werkstücke 50 genutzt werden.

Gemäß einer weiteren Ausgestaltung kann das Prozessmodul 60 jedoch auch vorrangig zur Abgabe verarbeiteter Werkstücke 50 genutzt werden. Dies ist etwa dann vorstellbar, wenn neue Werkstücke 50 beispielhaft entlang der Z-Richtung (senkrecht zur Ansichtsebene in Fig. 5) zuführbar sind, also etwa "seitlich" zugeführt werden können. Eine solche Zuführung neuer Werkstücke 50 kann etwa durch geeignete Aussparungen in der Werkstückspindel 38 oder im Reitstock 46 hindurcherfolgen. Beispielhaft ist in Fig. 5 ein Bereitstellungsraum 102d angedeutet, in dem ein neues Werkstück 50 etwa durch die Spanneinrichtung 40 hindurch in die Werkstückaufnahme 34 eingebracht werden kann. Mit anderen Worten kann das Prozessmodul 60 etwa als "Einwegmodul" ausgebildet sein und beispielhaft lediglich zur Abgabe (alternativ lediglich zur Zuführung) von Werkstücken 50 ausgebildet sein.

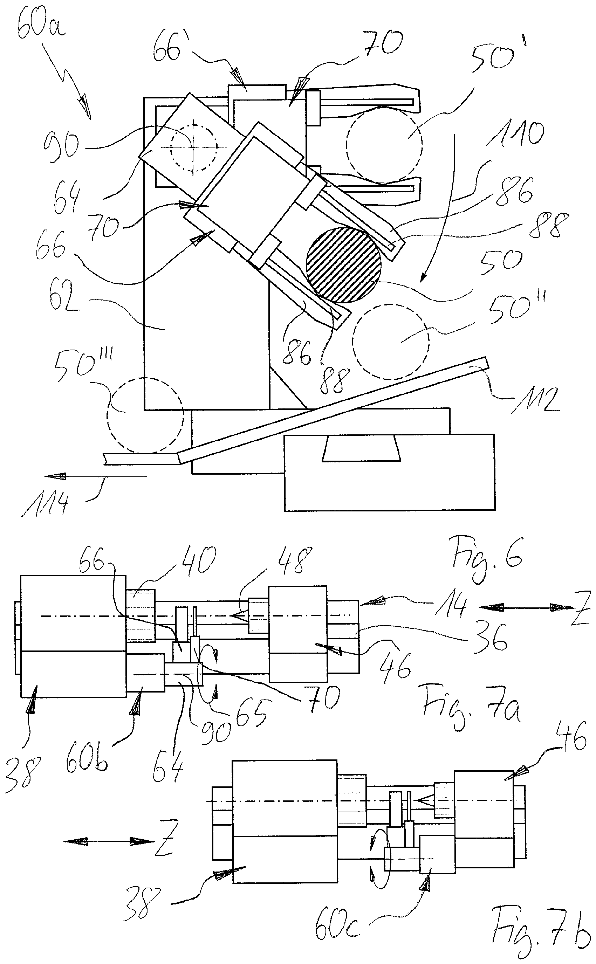

In Fig. 6 ist ein Prozessmodul 60a dargestellt. Das Prozessmodul 60a ist mit einer Abgaberampe 112 gekoppelt, die einer Abgabestrecke 114 zugeordnet ist. Das Prozessmodul 60a ist dazu ausgebildet, das Werkstück 50 ausgehend von einer Arbeitsstellung in eine Sekundärstellung zu verlagern, in der eine im Wesentlichen selbsttätige Abgabe des Werkstücks 50 ermöglicht ist. Die zugehörige Verfahrbewegung wird durch einen mit 110 bezeichneten Pfeil veranschaulicht. Die Arbeitsstellung des Werkstücks 50 ist beispielhaft mit 50' angedeutet. Die zugehörige Stellung der Handhabungseinrichtung 66 ist mit 66' angedeutet. Die Handhabungseinrichtung 66 mit dem von den Greifarmen 86 gehaltenen Werkstück 50 kann verlagert oder verschwenkt werden, um (nach dem Lösen der Greifarme 86) im Wesentlichen schwerkraftbedingt abgegeben zu werden. In einer mit 50" veranschaulichten Position ist das Werkstück 50 beispielhaft aus der Handhabungseinrichtung 66 herausgerutscht. Das Werkstück 50 kann die Abgaberampe 112 entlang gleiten, rollen oder rutschen und schlussendlich einer Abgabestrecke oder einem Abgabepfad 114 zugeführt werden, vgl. Bezugszeichen 50'", das eine zugehörige Lage kennzeichnet.

Es versteht sich, dass die Übernahme oder das Beladen mit einem neuen Werkstück 50 beispielhaft analog zur in Fig. 5 gezeigten Gestaltung in einem der Bereitstellungsräume 102a, 102b, 102c oder 102d erfolgen kann.

Anhand der Fig. 7a und 7b wird veranschaulicht, dass das Prozessmodul 60 mit der Handhabungseinrichtung 66 und der Messeinrichtung 70 alternativ auch mittelbar an der Führung 36 im Maschinenbett 14 aufgenommen sein kann.

In Fig. 7a ist ein Prozessmodul 60b dargestellt, das beispielhaft an der Werkstückspindel 38 (bzw. an einem Gehäuse davon) aufgenommen ist. Auf diese Weise kann das Prozessmodul 60b in der Z-Richtung gemeinsam mit der Werkstückspindel 38 verfahren werden.

In Fig. 7b ist ein Prozessmodul 60c dargestellt, das am Reitstock 46 aufgenommen ist. Das Prozessmodul 60c kann gemeinsam mit dem Reitstock 46 in der Z-Richtung verfahren werden. Im Übrigen können die Prozessmodule 60b und 60c über die vorstehend erläuterten Gestaltungen und Funktionalitäten verfügen.

Insbesondere bei besonders langen Werkstücken 50, etwa Werkstücken 50 mit ausgeprägten Längen-Durchmesser-Verhältnis, kann das Prozessmodul 60 eine Mehrzahl von Handhabungseinrichtungen 66 aufweisen, die insbesondere axial voneinander beabstandet sind. Auf diese Weise kann das (lange) Werkstück 50 an mehreren Axialpositionen entlang seiner Längserstreckung gegriffen und gehalten werden, um verlagert werden zu können.

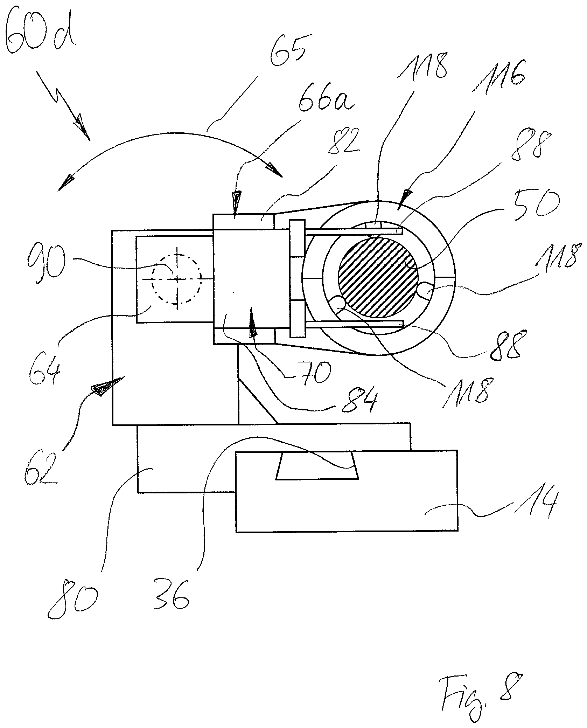

In Fig. 8 ist ein abgewandeltes Prozessmodul 60d dargestellt, das eine Handhabungseinrichtung 66a aufweist, die vorliegend nicht primär als Greifeinrichtung mit Greifarmen, sondern vielmehr als Stützeinrichtung fungiert. Insbesondere kann die Handhabungseinrichtung 66a eine Lünette 116 aufweisen, die eine Mehrzahl von Kontaktelementen 118 aufweist. Die Kontaktelemente 118 können grundsätzlich als Kontaktrollen oder als Kontaktflächen, etwa als Gleitflächen, ausgebildet sein. Die Kontaktelemente 118 können selektiv steuerbar sein, um das Werkstück 50 definiert freigeben oder kontaktieren zu können. Im gekoppelten (kontaktierten) Zustand kann die Lünette 116 das Werkstück 50 bei der Bearbeitung abstützen und bei der Verlagerung zwischen der Arbeitsstellung und der zumindest einen Sekundärstellung halten und führen. Die übrige Gestaltung und Funktionalität des Prozessmoduls 60d kann der Gestaltung und Funktionalität des Prozessmoduls 60a gemäß Fig. 4a entsprechen.

In einer Sekundärstellung kann das Werkstück 50 der Lünette 116 seitlich (etwa in der Z-Richtung) zugeführt werden. In der gleichen oder einer weiteren Sekundärstellung kann das Werkstück 50 seitlich von der Lünette 116 abgegeben werden. Es sind auch Gestaltungen der Handhabungseinrichtung 66a denkbar, bei denen die Lünette 116 seitlich geöffnet ist, etwa bei einer C-förmigen Lünette. Es sind ferner Gestaltungen der Handhabungseinrichtung 66a denkbar, bei denen die Lünette 116 ausgehend von einem ringförmigen, geschlossenen Zustand und einen geöffneten Zustand überführt werden kann. Das Werkstück 50 kann derartigen Lünetten 116 alternativ auch radial zugeführt werden.

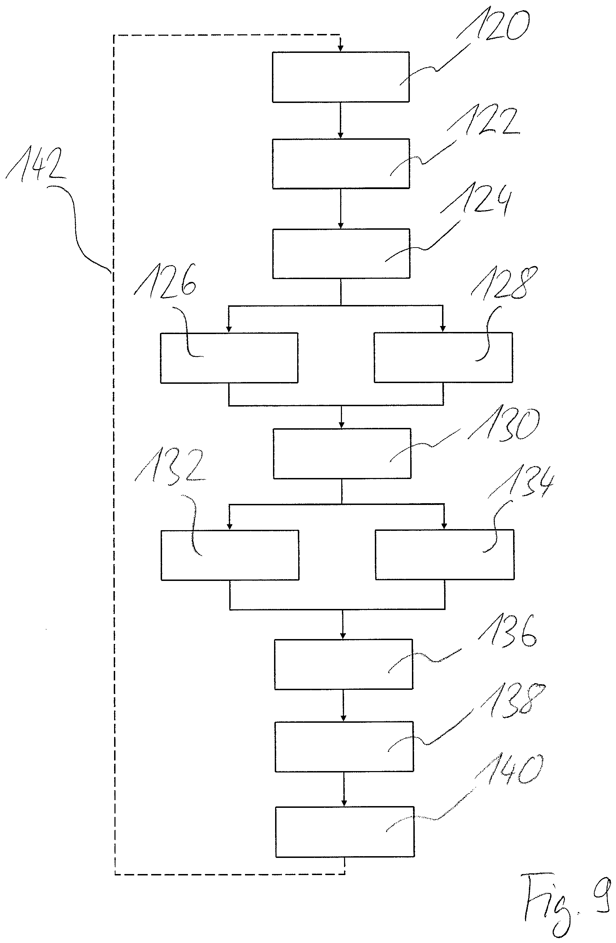

Fig. 9 veranschaulicht in stark vereinfachter Weise anhand eines schematischen Flussdiagramms ein beispielhaftes Verfahren zur automatisierten spanenden Bearbeitung von Werkstücken, insbesondere zum Schleifen von Werkstücken in einer Schleifmaschine. In einem ersten Schritt 120 erfolgt eine Übernahme eines neuen (unbearbeiteten) Werkstücks 50 durch eine Handhabungseinrichtung 66, die gemeinsam mit einer Messeinrichtung 70 mit einem Positionierantrieb 62 gekoppelt ist. Die Übernahme kann in einer Sekundärstellung erfolgen. Die Übernahme kann ein Greifen des Werkstücks 50 mit der Handhabungseinrichtung 66, insbesondere mit Greifarmen 86 umfassen. Das übernommene, gegriffene und gehaltene Werkstück 50 wird jedoch nicht mit der Messeinrichtung 70 gekoppelt, insbesondere nicht durch Messtaster 88 der Messeinrichtung 70 kontaktiert.

In einem weiteren Schritt 122 erfolgt eine gemeinsame Verlagerung der Handhabungseinrichtung 66 und der Messeinrichtung 70 mit dem an der Handhabungseinrichtung 66 aufgenommenen Werkstück 50. Die Verlagerung wird durch den Positionierantrieb 62 bewirkt. Die Verlagerung erfolgt aus der Sekundärstellung in Richtung auf eine Arbeitsstellung, in der das Werkstück 50 bearbeitet werden kann, insbesondere geschliffen werden kann.

In einem weiteren Schritt 124 kann eine Übergabe des Werkstücks 50 von der Handhabungseinrichtung 66 an eine Werkstückaufnahme 34 erfolgen. Das Werkstück 50 kann an der Werkstückaufnahme 34 aufgenommen bzw. fixiert werden.

Es können sich zwei Schritte 126, 128 anschließen, die grundsätzlich zeitgleich, überlappend oder nacheinander ausführbar sind. Der Schritt 126 kann das Überführen der Handhabungseinrichtung 66 in eine Lösekonfiguration umfassen, in der das Werkstück 50 etwa nicht durch die Greifarme 86 kontaktiert ist. Der Schritt 128 kann das Überführen der Messeinrichtung 70 in eine Messkonfiguration umfassen, in der insbesondere die Messtaster 88 auf das Werkstück 50 zugeführt werden können, um dieses zu kontaktieren. Insbesondere dann, wenn die Handhabungseinrichtung 66 als Stützeinrichtung, etwa als Lünette 116, fungiert, kann der Schritt 126 (sowie der spätere Schritt 132) übersprungen werden. In diesem Fall ist es grundsätzlich gewünscht, dass das Werkstück 50 auch während der Bearbeitung mit der Handhabungseinrichtung 66 gekoppelt bleibt.

Es kann sich ein Schritt 130 anschließen, in dem das Werkstück 50 etwa mittels der Schleifscheibe 18 bearbeitet wird. Die Bearbeitung des Werkstücks 50 kann mit einem Messvorgang bzw. mit einer Erfassung zumindest eines Werkstückparameters einhergehen. Die Erfassung kann mittels der sich in der Messkonfiguration befindlichen Messeinrichtung 70 erfolgen. Beispielhaft können die Messtaster 88 einen Durchmesser, einen Rundlauf oder eine Oberflächenrauheit des Werkstücks 50 erfassen.

Nach einem Bearbeitungsende können sich weitere Schritte 132, 134 anschließen, die analog zu den Schritten 126 und 128 zeitgleich, zumindest teilweise überlappend oder aber nacheinander ausgeführt werden können. Der Schritt 132 kann das Koppeln der Handhabungseinrichtung 66 mit dem Werkstück 50 umfassen. Dabei kann es sich etwa um eine Überführung der Handhabungseinrichtung 66 in eine Greifkonfiguration handeln, in der Greifarme 86 das Werkstück 50 kontaktieren, fassen und halten können. Der Schritt 134 kann das Entkoppeln der Messeinrichtung 70 vom Werkstück 50 umfassen, also etwa das Überführen der Messeinrichtung 70 in eine Außereingriffkonfiguration.

In einem insbesondere dem Schritt 132 nachgelagerten Schritt 136 kann das Werkstück 50 von der Werkstückaufnahme 34 entkoppelt werden.

Es kann sich ein Schritt 138 anschließen, der ein Überführen des Prozessmoduls 60 aus der Arbeitsstellung in eine Sekundärstellung anschließen. Die Sekundärstellung kann der Sekundärstellung des Schritts 120 entsprechen, jedoch auch davon abweichen. Die gemeinsame Verlagerung der Handhabungseinrichtung 66 und der Messeinrichtung 70 mit dem an der Handhabungseinrichtung 66 aufgenommenen Werkstück 50 wird durch den Positionierantrieb 62 bewirkt.

In einem weiteren Schritt 140 kann das bearbeitete Werkstück 50 an externe Handlingeinrichtungen abgegeben werden. Ein mit 142 bezeichneter Pfeil veranschaulicht, dass die genannten Schritte wiederholbar sind, um ein neues (unbearbeitetes) Werkstück 50 der Bearbeitung zuzuführen. Auf diese Weise kann sich eine vorteilhafte Kombination eines automatisierten Werkstückwechsels mit einer integrierten Messung, Erfassung und Überwachung von Werkstückparametern, insbesondere von Werkstückabmessungen, ergeben.

## Patentansprüche

1. Werkzeugmaschine, insbesondere Schleifmaschine, zur spanenden Bearbeitung von Werkstücken, mit einer Werkstückaufnahme (34) zur Aufnahme eines Werkstücks (50), mit einem Spindelkopf (24) zur Aufnahme eines Werkzeugs, insbesondere einer Schleifscheibe (18), mit einer Handhabungseinrichtung (66) zum automatisieren Werkstückwechsel, und mit einer Messeinrichtung (70) zur Erfassung zumindest eines Werkstückparameters, wobei die Handhabungseinrichtung (66) zumindest ein Handhabungsorgan (68), insbesondere zumindest ein Greiforgan, aufweist, wobei die Messeinrichtung (70) zumindest ein Messorgan (72) aufweist, und wobei die Handhabungseinrichtung (66) und die Messeinrichtung (70) mit einem gemeinsamen Positionierantrieb (62) gekoppelt sind, wobei die Handhabungseinrichtung (66) und die Messeinrichtung (70) miteinander verbundene Grundkörper (82, 84) aufweisen, die relativ zueinander starr gekoppelt sind, und wobei der Positionierantrieb (62) dazu ausgebildet ist, die Handhabungseinrichtung (66) und die Messeinrichtung (70) relativ zu einer durch die Werkstückaufnahme (34) definierten Längsachse (42) zu verlagern, und dass der Positionierantrieb (62) als Schwenkantrieb ausgebildet ist,
**dadurch gekennzeichnet, dass** die Handhabungseinrichtung (66) und die Messeinrichtung (70) durch den Positionierantrieb (62) gemeinsam zwischen einer Arbeitsstellung, in der eine Bearbeitung des Werkstücks (50) ermöglicht ist, und zumindest einer Sekundärstellung, in der ein Beladevorgang oder Entladevorgang ermöglicht ist, verlagerbar sind.

2. Werkzeugmaschine (10) nach Anspruch 1, **dadurch gekennzeichnet, dass** das zumindest eine Handhabungsorgan (68) und das zumindest eine Messorgan (72) zueinander benachbart angeordnet sind.

3. Werkzeugmaschine (10) nach Anspruch 2, **dadurch gekennzeichnet, dass** das zumindest eine Handhabungsorgan (68) und das zumindest eine Messorgan (72) in Richtung der Längsachse (42) axial hintereinander angeordnet sind.

4. Werkzeugmaschine (10) nach einem der vorhergehenden Ansprüche, **dadurch gekennzeichnet, dass** die Handhabungseinrichtung (66) und die Messeinrichtung (70) an einem Schwenkarm (64) des Positionierantriebs (62) aufgenommen sind und/oder mit dem Positionierantrieb (62) als Teile eines Prozessmoduls (60) ausgebildet sind, das mittelbar oder unmittelbar an einer gestellfesten Führung (36) der Werkzeugmaschine (10) gelagert ist.

5. Werkzeugmaschine (10) nach einem der vorhergehenden Ansprüche, **dadurch gekennzeichnet, dass** die Handhabungseinrichtung (66) einen Greifer (86) aufweist, der zumindest eine Greifkonfiguration und eine Lösekonfiguration einnehmen kann.

6. Werkzeugmaschine (10) nach einem der vorhergehenden Ansprüche, **dadurch gekennzeichnet, dass** die Messeinrichtung (70) einen Messkopf aufweist, der zumindest einen Messtaster (88), aufweist, der dazu ausgebildet ist, einen Abschnitt (52) des Werkstücks (50) umfänglich zu kontaktieren.

7. Werkzeugmaschine (10) nach Anspruch 6, **dadurch gekennzeichnet, dass** die Messeinrichtung (70) einen Messkopf mit zwei einander zugewandten Messtastern (88) aufweist, die dazu ausgebildet sind, einen Abschnitt (52) des Werkstücks (50) umfänglich zu kontaktieren

8. Werkzeugmaschine (10) nach einem der vorhergehenden Ansprüche, **dadurch gekennzeichnet, dass** das zumindest eine Messorgan (72) selektiv zwischen einer Messkonfiguration und einer Außereingriffkonfiguration verlagerbar ist.

9. Werkzeugmaschine (10) nach einem der vorhergehenden Ansprüche, **gekennzeichnet durch** eine Steuereinrichtung (74), die dazu ausgebildet ist, die gemeinsame Verlagerung der Handhabungseinrichtung (66) und der Messeinrichtung (70) zwischen der Arbeitsstellung und der zumindest einen Sekundärstellung derart zu steuern, dass die Handhabungseinrichtung (66) in der Arbeitsstellung zumindest während einer Hauptnutzungszeit vom Werkstück (50) entkoppelt ist, und dass die Messeinrichtung (70) zumindest während der Verlagerung vom Werkstück (50) entkoppelt ist.

10. Werkzeugmaschine (10) nach Anspruch 9, **dadurch gekennzeichnet, dass** während der Hauptnutzungszeit eine Bearbeitung des Werkstücks (50) erfolgt.

11. Werkzeugmaschine (10) nach Anspruch 9 oder 10, **dadurch gekennzeichnet, dass** die Steuereinrichtung (74) ferner dazu ausgebildet ist, die Werkstückaufnahme (34) anzusteuern, um in der Arbeitsstellung zumindest eine Übergabe des Werkstücks (50) zwischen der Handhabungseinrichtung (66) und der Werkstückaufnahme (34) zu erlauben.

12. Werkzeugmaschine (10) nach einem der vorhergehenden Ansprüche, **dadurch gekennzeichnet, dass** in zumindest einer Sekundärstellung zumindest eine Übernahme oder Abgabe des Werkstücks (50) durch die Handhabungseinrichtung (66) ermöglicht ist.

13. Werkzeugmaschine (10) nach einem der vorhergehenden Ansprüche, **dadurch gekennzeichnet, dass** der Handhabungseinrichtung (66) eine Abgabestrecke (114) zugeordnet ist, die insbesondere eine Abgaberampe (112) mit einer zumindest teilweise geneigten Fläche aufweist und zum Abführen eines abzugebenden Werkstücks (50) ausgebildet ist.

14. Werkzeugmaschine (10) nach einem der vorhergehenden Ansprüche, **dadurch gekennzeichnet, dass** die Handhabungseinrichtung (66) eine Stützeinrichtung aufweist, insbesondere eine Lünette (116) mit einer Mehrzahl von Kontaktelementen (118), die dazu ausgebildet ist, das Werkstück (50) in der Arbeitsstellung abzustützen und beim Wechsel zwischen der Arbeitsstellung und der zumindest einen Sekundärstellung zu führen.

15. Verfahren zur automatisierten spanenden Bearbeitung von Werkstücken, insbesondere zum Schleifen von Werkstücken in einer Schleifmaschine, mit den folgenden Schritten:
- Übernahme eines zu bearbeitenden Werkstücks (50) mittels einer Handhabungseinrichtung (66) in einer Sekundärstellung, wobei die Handhabungseinrichtung (66) gemeinsam mit einer Messeinrichtung (70) mit einem Positionierantrieb (62) gekoppelt ist, wobei die Handhabungseinrichtung (66) und die Messeinrichtung (70) gemeinsam durch den Positionierantrieb (62) zwischen einer Arbeitsstellung, in der eine Bearbeitung des Werkstücks (50) ermöglicht ist, und zumindest einer Sekundärstellung, in der ein Beladevorgang oder Entladevorgang ermöglicht ist, verlagerbar sind, wobei die Handhabungseinrichtung (66) und die Messeinrichtung (70) miteinander verbundene Grundkörper (82, 84) aufweisen, die relativ zueinander starr gekoppelt sind, wobei der Positionierantrieb (62) dazu ausgebildet ist, die Handhabungseinrichtung (66) und die Messeinrichtung (70) relativ zu einer durch die Werkstückaufnahme (34) definierten Längsachse (42) zu verlagern, und wobei der Positionierantrieb (62) als Schwenkantrieb ausgebildet ist;
- Verlagern der Handhabungseinrichtung (66) mit dem Werkstück (50) aus der Sekundärstellung in die Arbeitsstellung durch den Positionierantrieb (62);
- Aufnahme des Werkstücks (50) durch eine Werkstückaufnahme (34);
- Entkoppeln der Handhabungseinrichtung (66) vom Werkstück (50);
- Koppeln der Messeinrichtung (70) mit dem Werkstück (50);
- Bearbeiten des Werkstücks (50), insbesondere Schleifen des Werkstücks (50);
- Entkoppeln der Messeinrichtung (70) vom Werkstück (50); Koppeln der Handhabungseinrichtung (66) mit dem Werkstück (50); und
- Verlagern der Handhabungseinrichtung (66) mit dem Werkstück (50) aus der Arbeitsstellung in die Sekundärstellung zur Abgabe des Werkstücks (50) durch den Positionierantrieb (62).

## Claims

1. A machine tool, in particular a grinding machine, for machining workpieces, comprising a workpiece holder (34) for holding a workpiece (50), a spindle head (24) for holding a tool, in particular a grinding wheel (18), a handling device (66) for an automated workpiece change, and a measuring device (70) for detecting at least one workpiece parameter, wherein the handling device (66) comprises at least one handling member (68), in particular at least one gripping member, wherein the measuring device (70) comprises at least one measuring member (72), and wherein the handling device (66) and the measuring device (70) are coupled to a common positioning drive (62), wherein the handling device (66) and the measuring device (70) have interconnected base bodies (82, 84), which are rigidly coupled relative to one another, and wherein the positioning drive (62) is configured to displace the handling device (66) and the measuring device (70) relative to a longitudinal axis (42) that is defined by the workpiece holder (34), and wherein the positioning drive (62) is arranged as a swivel drive,
**characterized in that** the handling device (66) and the measuring device (70) are jointly displaceable by the positioning drive (62) between a working position, in which machining the workpiece (50) is possible, and at least one secondary position, in which a loading operation or unloading operation is possible.

2. The machine tool (10) according to claim 1, **characterized in that** the at least one handling member (68) and the at least one measuring member (72) are arranged adjacent to each other.

3. The machine tool (10) according to claim 2, **characterized in that** the at least one handling member (68) and the at least one measuring member (72) are arranged axially one behind the other in the direction of the longitudinal axis (42).

4. The machine tool (10) according to any one of the preceding claims, **characterized in that** the handling device (66) and the measuring device (70) are arranged on a swivel arm (64) of the positioning drive (62) and/or are formed with the positioning drive (62) as parts of a process module (60), which is mounted indirectly or directly on a guide (36) of the machine tool (10) that is fixed to the frame.

5. The machine tool (10) according to any one of the preceding claims, **characterized in that** the handling device (66) comprises a gripper (86) that is capable of adopting at least a gripping configuration and a release configuration.

6. The machine tool (10) according to any one of the preceding claims, **characterized in that** the measuring device (70) comprises a measuring head comprising at least one measuring probe (88) that is adapted to circumferentially contact a portion (52) of the workpiece (50).

7. The machine tool (10) according to claim 6, **characterized in that** the measuring device (70) comprises a measuring head with two measuring probes (88) that are facing each other and that are adapted to circumferentially contact a portion (52) of the workpiece (50).

8. The machine tool (10) according to any one of the preceding claims, **characterized in that** the at least one measuring member (72) is selectively displaceable between a measuring configuration and a disengaging configuration.

9. The machine tool (10) according to any one of the preceding claims, **characterized by** a control device (74) that is adapted to control the joint displacement of the handling device (66) and the measuring device (70) between the working position and the at least one secondary position in such a way that the handling device (66) is decoupled from the workpiece (50) in the working position at least during a main usage time, and that the measuring device (70) is decoupled from the workpiece (50) at least during said displacement.

10. The machine tool (10) according to claim 9, **characterized in that** machining the workpiece (50) takes place during the main usage time.

11. The machine tool (10) according to claim 9 or 10, **characterized in that** the control device (74) is further adapted to control the workpiece holder (34) to allow at least a transfer of the workpiece (50) between the handling device (66) and the workpiece holder (34) in the working position.

12. The machine tool (10) according to any one of the preceding claims, **characterized in that** in at least one secondary position at least a takeover or delivery of the workpiece (50) by the handling device (66) is enabled.

13. The machine tool (10) according to any one of the preceding claims, **characterized in that** the handling device (66) is associated with a delivery section (114), which particularly comprises a delivery ramp (112) having an at least partially inclined surface, and which is configured to discharge a workpiece (50) to be discharged.

14. The machine tool (10) according to any one of the preceding claims, **characterized in that** the handling device (66) comprises a support device, in particular a steady rest (116) having a plurality of contact elements (118), which is configured to support the workpiece (50) in the working position and to guide it when changing between the working position and the at least one secondary position.

15. A method for the automated machining of workpieces, in particular for grinding workpieces in a grinding machine, comprising the following steps:
- taking over a workpiece (50) to be machined by means of a handling device (66) in a secondary position, wherein the handling device (66) is coupled together with a measuring device (70) to a positioning drive (62), wherein the handling device (66) and the measuring device (70) are jointly displaceable by the positioning drive (62) between a working position, in which machining the workpiece (50) is made possible, and at least one secondary position, in which a loading operation or unloading operation is enabled, wherein the handling device (66) and the measuring device (70) comprise interconnected base bodies (82, 84), which are rigidly coupled relative to one another, wherein the positioning drive (62) is configured to displace the handling device (66) and the measuring device (70) relative to a longitudinal axis (42) that is defined by the workpiece holder (34), and wherein the positioning drive (62) is arranged as a swivel drive;
- displacing the handling device (66) with the workpiece (50) from the secondary position to the working position by the positioning drive (62);
- picking up of the workpiece (50) by a workpiece holder (34);
- decoupling the handling device (66) from the workpiece (50);
- coupling the measuring device (70) with the workpiece (50);
- machining the workpiece (50), in particular grinding the workpiece (50);
- decoupling the measuring device (70) from the workpiece (50); coupling the handling device (66) with the workpiece (50); and
- displacing the handling device (66) with the workpiece (50) from the working position to the secondary position for delivery of the workpiece (50) by the positioning drive (62).

## Revendications

1. Machine-outil, notamment meuleuse, pour l'usinage par enlèvement de copeaux de pièces, avec un logement de pièce (34) pour recevoir une pièce (50), avec une tête de broche (24) pour recevoir un outil, notamment un disque de meulage (18), avec un dispositif de manipulation (66) pour le changement de pièce automatisé, et avec un dispositif de mesure (70) pour détecter au moins un paramètre de pièce, le dispositif de manipulation (66) présentant au moins un organe de manipulation (68), notamment au moins un organe de préhension, le dispositif de mesure (70) présentant au moins un organe de mesure (72), et le dispositif de manipulation (66) et le dispositif de mesure (70) étant couplés à un entraînement de positionnement commun (62), le dispositif de manipulation (66) et le dispositif de mesure (70) présentant des corps de base (82, 84) reliés entre eux, qui sont couplés de manière rigide l'un par rapport à l'autre, et l'entraînement de positionnement (62) étant configuré pour déplacer le dispositif de manipulation (66) et le dispositif de mesure (70) par rapport à un axe longitudinal (42) défini par le logement de pièce (34), et
l'entraînement de positionnement (62) étant configuré sous forme d'entraînement pivotant,
**caractérisée en ce que** le dispositif de manipulation (66) et le dispositif de mesure (70) peuvent être déplacés ensemble par l'entraînement de positionnement (62) entre une position de travail dans laquelle un usinage de la pièce (50) est possible et au moins une position secondaire dans laquelle une opération de chargement ou une opération de déchargement est possible.

2. Machine-outil (10) selon la revendication 1, **caractérisée en ce que** l'au moins un organe de manipulation (68) et l'au moins un organe de mesure (72) sont agencés au voisinage l'un de l'autre.

3. Machine-outil (10) selon la revendication 2, **caractérisée en ce que** l'au moins un organe de manipulation (68) et l'au moins un organe de mesure (72) sont agencés axialement l'un derrière l'autre dans la direction de l'axe longitudinal (42).

4. Machine-outil (10) selon l'une quelconque des revendications précédentes, **caractérisée en ce que** le dispositif de manipulation (66) et le dispositif de mesure (70) sont reçus sur un bras pivotant (64) de l'entraînement de positionnement (62) et/ou sont configurés avec l'entraînement de positionnement (62) en tant que parties d'un module de processus (60) qui est monté directement ou indirectement sur un guidage (36) fixe par rapport au bâti de la machine-outil (10).

5. Machine-outil (10) selon l'une quelconque des revendications précédentes, **caractérisée en ce que** le dispositif de manipulation (66) présente un préhenseur (86) qui peut prendre au moins une configuration de préhension et une configuration de libération.

6. Machine-outil (10) selon l'une quelconque des revendications précédentes, **caractérisée en ce que** le dispositif de mesure (70) présente une tête de mesure qui présente au moins un palpeur de mesure (88) qui est configuré pour entrer en contact avec une section (52) de la pièce (50) sur sa circonférence.

7. Machine-outil (10) selon la revendication 6, **caractérisée en ce que** le dispositif de mesure (70) présente une tête de mesure avec deux palpeurs de mesure (88) se faisant face, qui sont configurés pour entrer en contact avec une section (52) de la pièce (50) sur sa circonférence.

8. Machine-outil (10) selon l'une quelconque des revendications précédentes, **caractérisée en ce que** l'au moins un organe de mesure (72) peut être déplacé de manière sélective entre une configuration de mesure et une configuration de dégagement.

9. Machine-outil (10) selon l'une quelconque des revendications précédentes, **caractérisée par** un dispositif de commande (74) qui est configuré pour commander le déplacement commun du dispositif de manipulation (66) et du dispositif de mesure (70) entre la position de travail et l'au moins une position secondaire de telle sorte que le dispositif de manipulation (66) est découplé de la pièce (50) dans la position de travail au moins pendant une période d'utilisation principale, et que le dispositif de mesure (70) est découplé de la pièce (50) au moins pendant le déplacement.

10. Machine-outil (10) selon la revendication 9, **caractérisée en ce qu'**un usinage de la pièce (50) a lieu pendant la période d'utilisation principale.

11. Machine-outil (10) selon la revendication 9 ou 10, **caractérisée en ce que** le dispositif de commande (74) est en outre configuré pour commander le logement de pièce (34) afin de permettre au moins un transfert de la pièce (50) entre le dispositif de manipulation (66) et le logement de pièce (34) dans la position de travail.

12. Machine-outil (10) selon l'une quelconque des revendications précédentes, **caractérisée en ce que**, dans au moins une position secondaire, au moins une prise en charge ou une distribution de la pièce (50) est possible par le dispositif de manipulation (66).

13. Machine-outil (10) selon l'une quelconque des revendications précédentes, **caractérisée en ce que** le dispositif de manipulation (66) est associé à une section de distribution (114), qui présente notamment une rampe de distribution (112) avec une surface au moins partiellement inclinée et qui est configurée pour évacuer une pièce (50) à distribuer.

14. Machine-outil (10) selon l'une quelconque des revendications précédentes, **caractérisée en ce que** le dispositif de manipulation (66) présente un dispositif de soutien, notamment une lunette (116) avec une pluralité d'éléments de contact (118), qui est configuré pour soutenir la pièce (50) dans la position de travail et pour la guider lors du changement entre la position de travail et l'au moins une position secondaire.

15. Procédé d'usinage par enlèvement de copeaux automatisé de pièces, notamment pour le meulage de pièces dans une meuleuse, comprenant les étapes suivantes:
- la prise en charge d'une pièce à usiner (50) au moyen d'un dispositif de manipulation (66) dans une position secondaire, le dispositif de manipulation (66) étant couplé conjointement à un dispositif de mesure (70) à un entraînement de positionnement (62), le dispositif de manipulation (66) et le dispositif de mesure (70) étant déplacés ensemble par l'entraînement de positionnement (62) entre une position de travail dans laquelle un usinage de la pièce (50) est possible et au moins une position secondaire dans laquelle une opération de chargement ou une opération de déchargement est possible, le dispositif de manipulation (66) et le dispositif de mesure (70) présentant des corps de base (82, 84) reliés entre eux, qui sont couplés de manière rigide l'un par rapport à l'autre, l'entraînement de positionnement (62) étant configuré pour déplacer le dispositif de manipulation (66) et le dispositif de mesure (70) par rapport à un axe longitudinal (42) défini par le logement de pièce (34), et l'entraînement de positionnement (62) étant configuré sous forme d'entraînement pivotant;
- le déplacement du dispositif de manipulation (66) avec la pièce (50) de la position secondaire à la position de travail par l'entraînement de positionnement (62);
- la réception de la pièce (50) par un logement de pièce (34);
- le découplage du dispositif de manipulation (66) de la pièce (50);
- le couplage du dispositif de mesure (70) à la pièce (50);
- l'usinage de la pièce (50), notamment le meulage de la pièce (50);
- le découplage du dispositif de mesure (70) de la pièce (50); le couplage du dispositif de manipulation (66) à la pièce (50); et
- le déplacement du dispositif de manipulation (66) avec la pièce (50) de la position de travail à la position secondaire pour la distribution de la pièce (50) par l'entraînement de positionnement (62).
